# EUROPEAN PATENT SPECIFICATION

(11) **EP 4 439 248 B1**
(45) Date of publication and mention of the grant of the patent: **09.12.2026**
(21) Application number: 24158455.6
(22) Date of filing: 19.02.2024
(51) Int. Cl.: G06F 3/01, G06F 3/0346, G06F 9/451

(54) **EXCLUSIVE MODE TRANSITIONS**
WECHSEL DES EXKLUSIVEN MODUS
TRANSITIONS DE MODE EXCLUSIF

(30) Priority: 31.03.2023 US 202318194221
(43) Date of publication of application: 02.10.2024
(73) Proprietor: Meta Platforms Technologies, LLC, Menlo Park, CA 94025 (US)
(72) Inventor: Freeman, Zachary Gil, Menlo Park (US); Arora, Tushar, Menlo Park (US); Simmons, Johnathon, Menlo Park (US)
(74) Representative: Murgitroyd & Company

(56) References cited:
- US-A1- 2019 278 432
- US-A1- 2022 122 329
- US-A1- 2022 318 035

## Description

### TECHNICAL FIELD

The present disclosure is directed to transitioning from a shared experience environment to an exclusive mode for an experience in an artificial reality environment.

### BACKGROUND

In recent years, the fields of virtual reality (VR) and augmented reality (AR) have gained significant attention due to their potential to revolutionize the way people interact with digital content. These technologies enable users to experience immersive digital environments in a way that was previously impossible. Virtual reality typically involves the use of a headset or other device that fully blocks out the user's physical surroundings and replaces them with a digital world. Augmented reality, on the other hand, overlays digital information on top of the user's real-world environment. Both VR and AR have numerous applications in fields such as entertainment, education, training, and healthcare. For example, VR can be used to simulate dangerous or complex scenarios for training purposes, while AR can provide real-time information and guidance to workers in industrial settings. Mixed reality (MR) systems can allow light to enter a user's eye that is partially generated by a computing system and partially includes light reflected off objects in the real-world. AR, MR, and VR (collectively XR) experiences can be observed by a user through a head-mounted display (HMD), such as glasses or a headset. US2022318035 discloses a method for transitioning an application, comprising an artificial reality (XR) experience, from operating in a shared experience environment to operating in an exclusive mode, the method comprising: rendering, by an XR device, the shared experience environment comprising multiple augments, corresponding to multiple applications, wherein the multiple augments comprise an augment, for the XR experience; and in response to receiving an exclusive mode transition indication, transitioning the XR experience from operating in the shared experience environment to operating in the exclusive mode; providing, to the XR experience, access to write content into an area and preventing the multiple applications, other than the XR experience, from writing content into the area. US2019278432 and US2022122329 disclose background useful for understanding the invention.

### SUMMARY

The present invention provides a method, a computer-readable storage medium and a system as defined in the appended claims.

In accordance with a first aspect, there is provided a method for transitioning an application, comprising an artificial reality (XR) experience, from operating in a shared experience environment to operating in an exclusive mode, the method comprising:
rendering, by an XR device, the shared experience environment comprising multiple augments, corresponding to multiple applications, wherein the multiple augments comprise an augment, for the XR experience; and
in response to receiving an exclusive mode transition indication, transitioning the XR experience from operating in the shared experience environment to operating in the exclusive mode by:
   causing the multiple augments, other than the augment for the XR experience, to enter an inactive state;
   providing permissions for the XR experience to access exclusive mode application programing interfaces (APIs) that provide heightened access to system resources and environment information;
   providing, to the XR experience, access to write content into an area comprising at least some locations previously occupied by the multiple augments other than the augment; and
   preventing the multiple applications, other than the XR experience, from writing content into the area.

The environment information may allow the XR experience to coordinate interactions between one or more entities of the augment and multiple real-world surfaces.

Transitioning the XR experience from operating within the shared experience environment to operating in the exclusive mode may comprise:
eliminating a constraint, imposed on the XR experience in the shared experience environment, on an area into which the XR experience can write content; and
permitting the XR experience to provide content on each of the multiple real-world surfaces.

The augments entering the inactive state may comprise the augments being hidden from view and restricting an amount of processing that can be performed by the corresponding applications.

The augment may be a first augment;
wherein a second augment, of the multiple augments, is for a second XR experience within the shared experience environment;
wherein the second augment defines a second container having additional one or more entities; and
wherein the method further comprises:
   obtaining state information for the second XR experience, the state information comprising an identifier associated with the second augment;
   saving the state information for the second XR experience during the transitioning of the XR experience from operating in the shared experience environment to operating in exclusive mode; and
   causing the second XR experience to enter an inactive state, wherein, when the second XR experience is in the inactive state, the second augment is hidden.

The method may further comprise:
in response to receiving an indication to exit the exclusive mode, transitioning the XR experience from operating in the exclusive mode to operating in the shared experience environment by:
obtaining the state information for the second XR experience;
removing, from the XR experience, the access to write content into the entirety of the area; and
causing the second XR experience to enter an active state, wherein, when the second XR experience is in the active state, the second augment is rendered by the XR device in accordance with the state information for the second XR experience.

Transitioning the XR experience from operating in the exclusive mode to operating in the shared experience environment may comprise:
removing the permissions for the XR experience to access the exclusive mode APIs.

Transitioning the XR experience from operating within the shared experience environment to the exclusive mode may comprise modifying an amount of system resources allocated to the XR experience; and
wherein a greater amount of system resources are allocated to the XR experience when the XR experience operates in exclusive mode than when the XR experience operates within the shared experience environment.

The system resources may comprise at least one of: allocated processing capacity, allocated memory usage, allocated display area usage, or any combination thereof.

The augments entering the inactive state may comprise the augments being transitioned to a minimized form and moved to a dedicated inactive augment area.

In accordance with a second aspect, there is provided a computer-readable storage medium storing instructions that, when executed by a computing system, cause the computing system to perform a process for transitioning an application, comprising an artificial reality (XR) experience, from operating in a shared experience environment to operating in an exclusive mode, the process comprising:
rendering, by an XR device, the shared experience environment comprising multiple augments, corresponding to multiple applications, wherein the multiple augments comprise an augment, for the XR experience; and
in response to receiving an exclusive mode transition indication, transitioning the XR experience from operating in the shared experience environment to operating in the exclusive mode by:
   causing the multiple augments, other than the augment for the XR experience, to enter an inactive state;
   providing permissions for the XR experience to access exclusive mode application programing interfaces (APIs) that provide heightened access to system resources and environment information;
   providing, to the XR experience, access to write content into an area comprising at least some locations previously occupied by the multiple augments other than the augment; and
   preventing the multiple applications, other than the XR experience, from writing content into the area.

The environment information may allow the XR experience to coordinate interactions between one or more entities of the augment and multiple real-world surfaces.

Transitioning the XR experience from operating within the shared experience environment to operating in the exclusive mode may comprise:
eliminating a constraint, imposed on the XR experience in the shared experience environment, on an area into which the XR experience can write content; and
permitting the XR experience to provide content on each of the multiple real-world surfaces.

The augments entering the inactive state comprises the augments being hidden from view and restricting an amount of processing that can be performed by the corresponding applications.

The augment may be a first augment;
wherein a second augment, of the multiple augments, is for a second XR experience within the shared experience environment; and
wherein the process further comprises:
   obtaining state information for the second XR experience, the state information comprising an identifier associated with the second augment;
   saving the state information for the second XR experience during the transitioning of the XR experience from operating in the shared experience environment to operating in exclusive mode; and
   causing the second XR experience to enter an inactive state, wherein, when the second XR experience is in the inactive state, the second augment is hidden.

The process may further comprise:
in response to receiving an indication to exit the exclusive mode, transitioning the XR experience from operating in the exclusive mode to operating in the shared experience environment by:
obtaining the state information for the second XR experience;
removing, from the XR experience, the access to write content into the entirety of the area; and
causing the second XR experience to enter an active state, wherein, when the second XR experience is in the active state, the second augment is rendered by the XR device in accordance with the state information for the second XR experience.

In accordance with a third aspect, there is provided a computing system for transitioning an application, comprising an artificial reality (XR) experience, from operating in a shared experience environment to operating in an exclusive mode, the computing system comprising:
one or more processors; and
one or more memories storing instructions that, when executed by the one or more processors, cause the computing system to perform a process comprising:
   rendering, by an XR device, the shared experience environment comprising multiple augments, corresponding to multiple applications, wherein the multiple augments comprise an augment, for the XR experience, having one or more entities; and
   in response to receiving an exclusive mode transition indication, transitioning the XR experience from operating in the shared experience environment to operating in the exclusive mode by:
      causing the multiple augments, other than the augment for the XR experience, to enter an inactive state;
      providing permissions for the XR experience to access exclusive mode application programing interfaces (APIs) that provide heightened access to system resources and environment information;
         providing, to the XR experience, access to write content into an area comprising at least some locations previously occupied by the multiple augments other than the augment; and
         preventing the multiple applications, other than the XR experience, from writing content into the area.

Transitioning the XR experience from operating within the shared experience environment to the exclusive mode may comprise modifying an amount of system resources allocated to the XR experience; and
wherein a greater amount of system resources are allocated to the XR experience when the XR experience operates in exclusive mode than when the XR experience operates within the shared experience environment.

The system resources may comprise at least one of: allocated processing capacity, allocated memory usage, allocated display area usage, or any combination thereof.

The augments entering the inactive state comprises the augments being transitioned to a minimized form and moved to a dedicated inactive augment area.
It will be appreciated that any features described herein as being suitable for incorporation into one or more aspects are intended to be generalizable across any and all aspects described herein. Other aspects of the present disclosure can be understood by those skilled in the art in light of the description, the claims and the drawings. The foregoing general description and the following detailed description are exemplary and explanatory only and are not restrictive of the claims.

### BRIEF DESCRIPTION OF THE DRAWINGS

Figure 1 is a block diagram illustrating an overview of devices on which some implementations of the present technology can operate.
Figure 2A is a wire diagram illustrating a virtual reality headset which can be used in some implementations of the present technology.
Figure 2B is a wire diagram illustrating a mixed reality headset which can be used in some implementations of the present technology.
Figure 2C is a wire diagram illustrating controllers which, in some implementations, a user can hold in one or both hands to interact with an artificial reality environment.
Figure 3 is a block diagram illustrating an overview of an environment in which some implementations of the present technology can operate.
Figure 4 is a block diagram illustrating components which, in some implementations, can be used in a system employing the disclosed technology.
Figure 5 is a flow diagram illustrating a process used in some implementations of the present technology for transitioning an artificial reality (XR) experience operating within a shared experience environment to exclusive mode.
Figure 6 is a flow diagram illustrating a process used in some implementations of the present technology for transitioning an XR experience operating within a shared experience environment to exclusive mode by obtaining resource information and storing state information associated with other XR experiences.
Figure 7 is a flow diagram illustrating a process used in some implementations of the present technology for obtaining available resource information for an XR experience in an exclusive mode.
Figure 8 is a flow diagram illustrating a process used in some implementations of the present technology for determining available application programming interface(s) for an XR experience in an exclusive mode.
Figure 9 is a flow diagram illustrating a process used in some implementations of the present technology for storing state information associated with other XR experiences when transitioning to exclusive mode.
Figure 10 is a flow diagram illustrating a process used in some implementations for exiting exclusive mode and returning to a shared experience environment.
Figure 11A is a conceptual diagram illustrating an exemplary view from an artificial reality device of augments in a shared experience environment, overlaid on a view of a real-world environment surrounding the artificial reality device.
Figure 11B is a conceptual diagram illustrating an exemplary view from an artificial reality device of augments in a shared experience environment, overlaid on a view of a real-world environment surrounding the artificial reality device.
Figure 11C is a conceptual diagram illustrating an exemplary view from an artificial reality device of a transition from a shared experience environment to an exclusive mode, overlaid on a view of a real-world environment surrounding the artificial reality device.
Figure 11D is a conceptual diagram illustrating an exemplary view from an artificial reality device of an XR experience operating in exclusive mode, overlaid on a view of a real-world environment surrounding the artificial reality device.
Figure 11E is a conceptual diagram illustrating an exemplary view from an artificial reality device of an XR experience operating in exclusive mode, overlaid on a view of a real-world environment surrounding the artificial reality device.
Figure 11F is a conceptual diagram illustrating an exemplary view from an artificial reality device of an XR experience operating in exclusive mode, overlaid on a view of a real-world environment surrounding the artificial reality device.
Figure 11G is a conceptual diagram illustrating an exemplary view from an artificial reality device of an XR experience operating in exclusive mode, overlaid on a view of a real-world environment surrounding the artificial reality device.
Figure 12 is a conceptual diagram illustrating XR experiences with respect to operating within a shared experience environment and/or exclusive mode.
Figure 13 is a conceptual diagram illustrating action mapping differences for an XR experience operating within the shared experience environment versus operating in the exclusive mode.
Figure 14A depicts a conceptual diagram illustrating additional details directed to determining resource availability when an XR experience transitions from operating within a shared experience environment to exclusive mode.
Figure 14B depicts a conceptual diagram illustrating additional details directed to resource availability and use for an XR experience operating within a shared experience environment and exclusive mode.
Figure 15 depicts a conceptual diagram illustrating additional details directed to determining API availability and/or access for an XR experience operating within an exclusive mode.
Figure 16 is a conceptual diagram illustrating an exemplary view from an artificial reality device of an XR experience operating in exclusive mode, overlaid on a view of a real-world environment surrounding the artificial reality device.
Figure 17 is a conceptual diagram illustrating an exemplary view from an XR device of an XR experience operating in an exclusive mode.

The techniques introduced here may be better understood by referring to the following Detailed Description in conjunction with the accompanying drawings, in which like reference numerals indicate identical or functionally similar elements.

### DETAILED DESCRIPTION

Aspects of the present disclosure are directed to transitioning an artificial reality (XR) experience (i.e., an application capable of providing artificial reality content) from operating within a shared experience environment to operating in an exclusive mode. Some implementations of the present technology describe a process for transitioning a selected XR experience, of multiple XR experiences, from operating within a shared experience environment to operating in an exclusive mode, where the other non-selected XR experiences are hidden or otherwise placed into an inactive state during the transitioning process and while the selected XR experience is in exclusive mode. More specifically, in a shared experience environment, a user may interact with one or more XR experiences via one or more augments of the XR experience. The XR experiences can be, for example, XR applications installed on the XR device. A shared experience environment can include multiple XR experiences operating, configured, or otherwise placed by a user. Each XR experience can include multiple augments, where an augment includes one or more two-dimensional and three-dimensional entities, that are spatially bound together and presented within the shared experience environment. In some implementations, an entity may be the same as or similar to a virtual object, where a user can interact with and manipulate both an entity and a virtual object. In some implementations, the augment is presented as a bounding container such that the entities of the respective XR experience are confined within the bounding container. Further, when the XR experience operates within the shared experience environment, the XR experience is limited by or otherwise constrained by one or more rules of the shared experience environment. For example, an XR experience may be spatially constrained to a specific portion of the shared experience environment. Moreover, when the XR experience operates within the shared experience environment, each of the entities associated with the augment of the XR experience is limited by or otherwise constrained by one or more rules of the augment.

For example, an entity associated with an XR experience operating within the shared experience environment is limited to functioning within the bounding container specified by or otherwise provided by the augment. Further, interaction with the entity associated with the XR experience can be required to be within the bounding container. That is, a user will be permitted to interact with an XR experience if the interactions occur within the bounding container of the XR experience's augment. Further, when the XR experience operates within the shared experience environment, input and output information of the XR experience is obtained or provided through the augment associated with the XR experience. That is, input information is received by the augment and then provided to the XR experience, and output information is received by the augment and then provided to the XR device.

In addition, as multiple XR experiences can be operating within a shared experience environment, each of the XR experiences shares resource information with other XR experiences. For example, the multiple XR experiences operating within a shared experience environment will share processing capacity associated with a central processing unit (CPU) or graphical processing unit (GPU) of the XR device. As another example, the multiple XR experiences operating within a shared experience environment will share system memory of the XR device. Thus, each XR experience operating within the shared experience environment is resource limited based on other XR experiences that are concurrently operating.

In some implementations a selected XR experience can transition from operating within a shared experience environment to operating in an exclusive mode. During the transition to exclusive mode, other XR experiences (e.g., the non-selected XR experiences) operating within the shared experience environment are hidden or otherwise placed into an inactive state. Thus, the selected XR experience will be the sole XR experience operating (in an active state) on the XR device. As the selected XR experience is the only active XR experience operating on the XR device, the selected XR experience can access resources that are otherwise unavailable to the selected XR experience when the selected XR experience is operating within the shared experience environment. For example, the selected XR experience can access a greater amount of processing capacity processing capacity associated with a central processing unit (CPU) or graphical processing unit (GPU) of the XR device. As another example, the selected XR experience can access a greater amount of memory of the XR device.

Moreover, when the selected XR experience transitions to and then operates in the exclusive mode, the selected XR experience is no longer limited by or constrained by the rules of the shared experience environment and/or the augment associated with the selected XR experience. That is, the selected XR experience can operate without an augment when operating in the exclusive mode or the augment for the selected XR experience can be expanded e.g., to a larger size or to encompass the entire XR environment. Accordingly, the selected XR experience can be free to operate anywhere within the real-world environment, or the expanded augment, as rendered by the XR device and is not prohibited from interacting with various virtual objects, surfaces, or other information provided by the real-world environment. As an example, the selected XR experience can access input information directly from the XR device and provide output information directly to the XR device. More specifically, the selected XR experience can directly access raw data associated with coordinate locations, object tracking information, or other resources provided by the XR device. As another example, the selected XR experience can access application programming interfaces (APIs) that are otherwise inaccessible by the selected XR experience when the selected XR experience operates within the shared experience environment.

Embodiments of the disclosed technology may include or be implemented in conjunction with an artificial reality system. Artificial reality or extra reality (XR) is a form of reality that has been adjusted in some manner before presentation to a user, which may include, e.g., virtual reality (VR), augmented reality (AR), mixed reality (MR), hybrid reality, or some combination and/or derivatives thereof. Artificial reality content may include completely generated content or generated content combined with captured content (e.g., real-world photographs). The artificial reality content may include video, audio, haptic feedback, or some combination thereof, any of which may be presented in a single channel or in multiple channels (such as stereo video that produces a three-dimensional effect to the viewer). Additionally, in some embodiments, artificial reality may be associated with applications, products, accessories, services, or some combination thereof, that are, e.g., used to create content in an artificial reality and/or used in (e.g., perform activities in) an artificial reality. The artificial reality system that provides the artificial reality content may be implemented on various platforms, including a head-mounted display (HMD) connected to a host computer system, a standalone HMD, a mobile device or computing system, a "cave" environment or other projection system, or any other hardware platform capable of providing artificial reality content to one or more viewers.

"Virtual reality" or "VR," as used herein, refers to an immersive experience where a user's visual input is controlled by a computing system. "Augmented reality" or "AR" refers to systems where a user views images of the real world after they have passed through a computing system. For example, a tablet with a camera on the back can capture images of the real world and then display the images on the screen on the opposite side of the tablet from the camera. The tablet can process and adjust or "augment" the images as they pass through the system, such as by adding virtual objects. "Mixed reality" or "MR" refers to systems where light entering a user's eye is partially generated by a computing system and partially composes light reflected off objects in the real world. For example, a MR headset could be shaped as a pair of glasses with a pass-through display, which allows light from the real world to pass through a waveguide that simultaneously emits light from a projector in the MR headset, allowing the MR headset to present virtual objects intermixed with the real objects the user can see. "Artificial reality," "extra reality," or "XR," as used herein, refers to any of VR, AR, MR, or any combination or hybrid thereof.

Some implementations provide specific technological improvements in the area of transitioning an XR experience from a shared experience environment to an exclusive mode such that the XR experience can have access to additional resources that may be unavailable when the XR experience is operating within the shared experience environment. For example, when the XR experience operates within the shared experience environment, the XR experience may not have access to certain tools or features that require more display real estate, processing power, or memory. However, when a user selects an XR experience and then causes the XR experience to transition to and then operate in the exclusive mode, the XR experience can take advantage of the additional display real estate to display more information or provide additional functionality. This can include additional toolbars, menus, or panels that were not visible or otherwise were unavailable when operating within the shared experience environment. Similarly, an XR experience operating in an exclusive mode can access hardware resources of the XR device that would otherwise be unavailable to the XR experience when operating within a shared experience environment. In some implementations, a greater amount processing capacity associated with a CPU and/or GPU, a greater amount memory, and/or access to lower-level data, such as raw object tracking information and location coordinates, may be accessible when the XR experience is operating in the exclusive mode.

In some implementations, state information for XR experiences that are operating within the shared experience environment can be saved or otherwise stored during a transition to an exclusive mode such that the XR experiences can be restored when a selected XR experienced is transitioned from an exclusive mode back to a shared experience environment. Additionally, to allow for increased functionality when operating in an exclusive mode, some functions may be mapped to different functional outcomes, thereby providing a more extensive means to interact with additional capability and functionality that is otherwise unavailable within a shared experience environment.

Thus, when an XR experience is operating in an exclusive mode, the XR experience and the XR device can provide a more immersive or engaging experience for a user. For example, if the XR experience relates to a video game, the exclusive mode can provide a larger display area, higher frame rate, and/or more advanced graphics and audio. When in exclusive mode, the XR experience can provide the application with additional resources and capabilities that can enhance the user's experience and productivity.

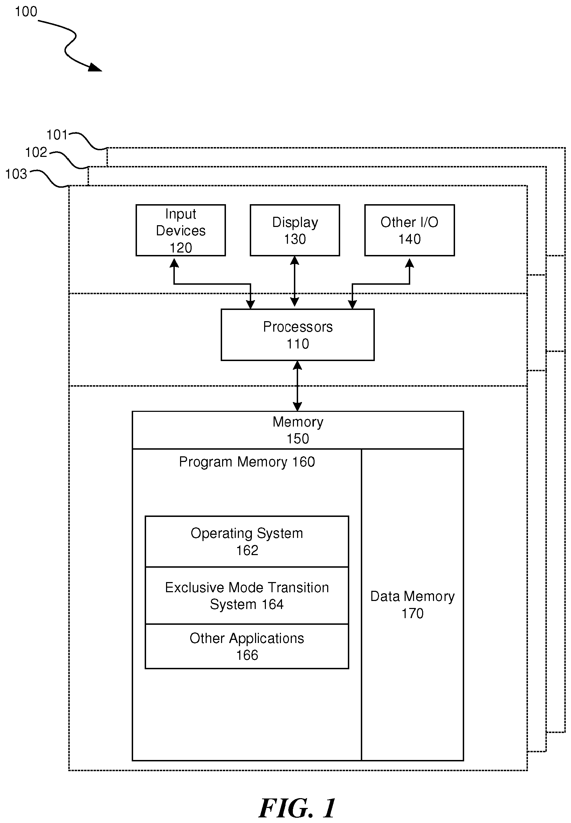

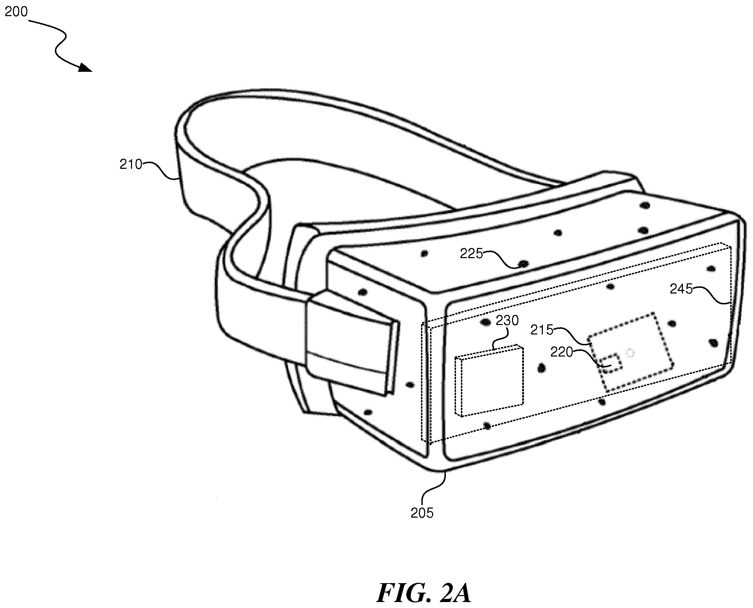

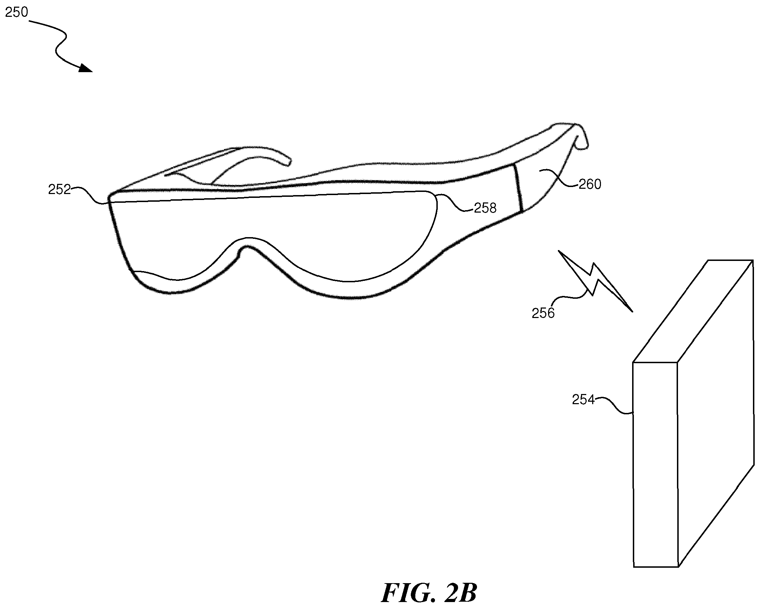

Several implementations are discussed below in more detail in reference to the figures. Figure 1 is a block diagram illustrating an overview of devices on which some implementations of the disclosed technology can operate. The devices can comprise hardware components of a computing system 100 that can provide and transition an artificial reality (XR) experience from operating within a shared experience environment to operating in an exclusive mode for an artificial reality (XR) environment. In various implementations, computing system 100 can include a single computing device 103 or multiple computing devices (e.g., computing device 101, computing device 102, and computing device 103) that communicate over wired or wireless channels to distribute processing and share input data. In some implementations, computing system 100 can include a stand-alone headset capable of providing a computer created or augmented experience for a user without the need for external processing or sensors. In other implementations, computing system 100 can include multiple computing devices such as a headset and a core processing component (such as a console, mobile device, or server system) where some processing operations are performed on the headset and others are offloaded to the core processing component. Example headsets are described below in relation to Figures 2A and 2B. In some implementations, position and environment data can be gathered only by sensors incorporated in the headset device, while in other implementations one or more of the non-headset computing devices can include sensor components that can track environment or position data.

Computing system 100 can include one or more processor(s) 110 (e.g., central processing units (CPUs), graphical processing units (GPUs), holographic processing units (HPUs), etc.) Processors 110 can be a single processing unit or multiple processing units in a device or distributed across multiple devices (e.g., distributed across two or more of computing devices 101-103).

Computing system 100 can include one or more input devices 120 that provide input to the processors 110, notifying them of actions. The actions can be mediated by a hardware controller that interprets the signals received from the input device and communicates the information to the processors 110 using a communication protocol. Each input device 120 can include, for example, a mouse, a keyboard, a touchscreen, a touchpad, a wearable input device (e.g., a haptics glove, a bracelet, a ring, an earring, a necklace, a watch, etc.), a camera (or other light-based input device, e.g., an infrared sensor), a microphone, or other user input devices.

Processors 110 can be coupled to other hardware devices, for example, with the use of an internal or external bus, such as a PCI bus, SCSI bus, or wireless connection. The processors 110 can communicate with a hardware controller for devices, such as for a display 130. Display 130 can be used to display text and graphics. In some implementations, display 130 includes the input device as part of the display, such as when the input device is a touchscreen or is equipped with an eye direction monitoring system. In some implementations, the display is separate from the input device. Examples of display devices are: an LCD display screen, an LED display screen, a projected, holographic, or augmented reality display (such as a heads-up display device or a head-mounted device), and so on. Other I/O devices 140 can also be coupled to the processor, such as a network chip or card, video chip or card, audio chip or card, USB, firewire or other external device, camera, printer, speakers, CD-ROM drive, DVD drive, disk drive, etc.

In some implementations, input from the I/O devices 140, such as cameras, depth sensors, IMU sensor, GPS units, LiDAR or other time-of-flights sensors, etc. can be used by the computing system 100 to identify and map the physical environment of the user while tracking the user's location within that environment. This simultaneous localization and mapping (SLAM) system can generate maps (e.g., topologies, girds, etc.) for an area (which may be a room, building, outdoor space, etc.) and/or obtain maps previously generated by computing system 100 or another computing system that had mapped the area. The SLAM system can track the user within the area based on factors such as GPS data, matching identified objects and structures to mapped objects and structures, monitoring acceleration and other position changes, etc.

Computing system 100 can include a communication device capable of communicating wirelessly or wire-based with other local computing devices or a network node. The communication device can communicate with another device or a server through a network using, for example, TCP/IP protocols. Computing system 100 can utilize the communication device to distribute operations across multiple network devices.

The processors 110 can have access to a memory 150, which can be contained on one of the computing devices of computing system 100 or can be distributed across of the multiple computing devices of computing system 100 or other external devices. A memory includes one or more hardware devices for volatile or non-volatile storage, and can include both read-only and writable memory. For example, a memory can include one or more of random access memory (RAM), various caches, CPU registers, read-only memory (ROM), and writable non-volatile memory, such as flash memory, hard drives, floppy disks, CDs, DVDs, magnetic storage devices, tape drives, and so forth. A memory is not a propagating signal divorced from underlying hardware; a memory is thus non-transitory. Memory 150 can include program memory 160 that stores programs and software, such as an operating system 162, exclusive mode transition system 164, and other application programs 166. Memory 150 can also include data memory 170 that can include, e.g., XR experience data, XR experience state data, augment data, rendering data, API access data, system resource data, function mapping data, configuration data, settings, user options or preferences, etc., which can be provided to the program memory 160 or any element of the computing system 100.

Some implementations can be operational with numerous other computing system environments or configurations. Examples of computing systems, environments, and/or configurations that may be suitable for use with the technology include, but are not limited to, XR headsets, personal computers, server computers, handheld or laptop devices, cellular telephones, wearable electronics, gaming consoles, tablet devices, multiprocessor systems, microprocessor-based systems, set-top boxes, programmable consumer electronics, network PCs, minicomputers, mainframe computers, distributed computing environments that include any of the above systems or devices, or the like.

Figure 2A is a wire diagram of a virtual reality head-mounted display (HMD) 200, in accordance with some embodiments. The HMD 200 includes a front rigid body 205 and a band 210. The front rigid body 205 includes one or more electronic display elements of an electronic display 245, an inertial motion unit (IMU) 215, one or more position sensors 220, locators 225, and one or more compute units 230. The position sensors 220, the IMU 215, and compute units 230 may be internal to the HMD 200 and may not be visible to the user. In various implementations, the IMU 215, position sensors 220, and locators 225 can track movement and location of the HMD 200 in the real world and in an artificial reality environment in three degrees of freedom (3DoF) or six degrees of freedom (6DoF). For example, the locators 225 can emit infrared light beams which create light points on real objects around the HMD 200. As another example, the IMU 215 can include e.g., one or more accelerometers, gyroscopes, magnetometers, other non-camera-based position, force, or orientation sensors, or combinations thereof. One or more cameras (not shown) integrated with the HMD 200 can detect the light points. Compute units 230 in the HMD 200 can use the detected light points to extrapolate position and movement of the HMD 200 as well as to identify the shape and position of the real objects surrounding the HMD 200.

The electronic display 245 can be integrated with the front rigid body 205 and can provide image light to a user as dictated by the compute units 230. In various embodiments, the electronic display 245 can be a single electronic display or multiple electronic displays (e.g., a display for each user eye). Examples of the electronic display 245 include: a liquid crystal display (LCD), an organic light-emitting diode (OLED) display, an active-matrix organic light-emitting diode display (AMOLED), a display including one or more quantum dot light-emitting diode (QOLED) sub-pixels, a projector unit (e.g., microLED, LASER, etc.), some other display, or some combination thereof.

In some implementations, the HMD 200 can be coupled to a core processing component such as a personal computer (PC) (not shown) and/or one or more external sensors (not shown). The external sensors can monitor the HMD 200 (e.g., via light emitted from the HMD 200) which the PC can use, in combination with output from the IMU 215 and position sensors 220, to determine the location and movement of the HMD 200.

Figure 2B is a wire diagram of a mixed reality HMD system 250 which includes a mixed reality HMD 252 and a core processing component 254. The mixed reality HMD 252 and the core processing component 254 can communicate via a wireless connection (e.g., a 60 GHz link) as indicated by link 256. In other implementations, the mixed reality system 250 includes a headset only, without an external compute device or includes other wired or wireless connections between the mixed reality HMD 252 and the core processing component 254. The mixed reality HMD 252 includes a pass-through display 258 and a frame 260. The frame 260 can house various electronic components (not shown) such as light projectors (e.g., LASERs, LEDs, etc.), cameras, eye-tracking sensors, MEMS components, networking components, etc.

The projectors can be coupled to the pass-through display 258, e.g., via optical elements, to display media to a user. The optical elements can include one or more waveguide assemblies, reflectors, lenses, mirrors, collimators, gratings, etc., for directing light from the projectors to a user's eye. Image data can be transmitted from the core processing component 254 via link 256 to HMD 252. Controllers in the HMD 252 can convert the image data into light pulses from the projectors, which can be transmitted via the optical elements as output light to the user's eye. The output light can mix with light that passes through the display 258, allowing the output light to present virtual objects that appear as if they exist in the real world.

Similarly to the HMD 200, the HMD system 250 can also include motion and position tracking units, cameras, light sources, etc., which allow the HMD system 250 to, e.g., track itself in 3DoF or 6DoF, track portions of the user (e.g., hands, feet, head, or other body parts), map virtual objects to appear as stationary as the HMD 252 moves, and have virtual objects react to gestures and other real-world objects.

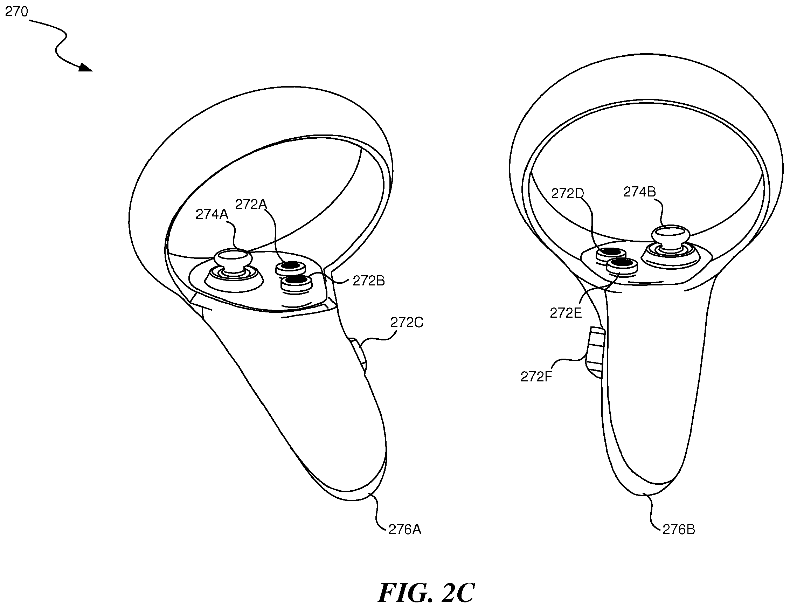

Figure 2C illustrates controllers 270 (including controller 276A and 276B), which, in some implementations, a user can hold in one or both hands to interact with an artificial reality environment presented by the HMD 200 and/or HMD 250. The controllers 270 can be in communication with the HMDs, either directly or via an external device (e.g., core processing component 254). The controllers can have their own IMU units, position sensors, and/or can emit further light points. The HMD 200 or 250, external sensors, or sensors in the controllers can track these controller light points to determine the controller positions and/or orientations (e.g., to track the controllers in 3DoF or 6DoF). The compute units 230 in the HMD 200 or the core processing component 254 can use this tracking, in combination with IMU and position output, to monitor hand positions and motions of the user. The controllers can also include various buttons (e.g., buttons 272A-F) and/or joysticks (e.g., joysticks 274A-B), which a user can actuate to provide input and interact with objects.

In various implementations, the HMD 200 or 250 can also include additional subsystems, such as an eye tracking unit, an audio system, various network components, etc., to monitor indications of user interactions and intentions. For example, in some implementations, instead of or in addition to controllers, one or more cameras included in the HMD 200 or 250, or from external cameras, can monitor the positions and poses of the user's hands to determine gestures and other hand and body motions. As another example, one or more light sources can illuminate either or both of the user's eyes and the HMD 200 or 250 can use eye-facing cameras to capture a reflection of this light to determine eye position (e.g., based on set of reflections around the user's cornea), modeling the user's eye and determining a gaze direction.

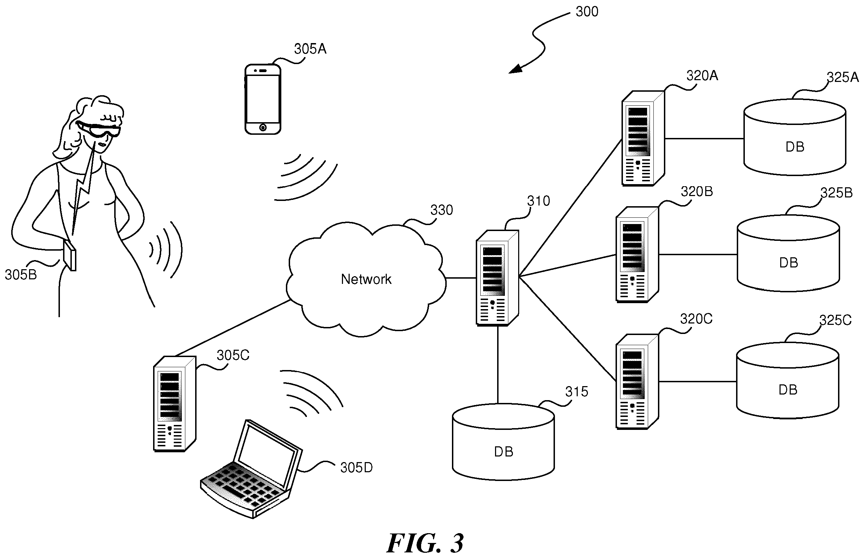

Figure 3 is a block diagram illustrating an overview of an environment 300 in which some implementations of the disclosed technology can operate. Environment 300 can include one or more client computing devices 305A-D, examples of which can include computing system 100. In some implementations, some of the client computing devices (e.g., client computing device 305B) can be the HMD 200 or the HMD system 250. Client computing devices 305 can operate in a networked environment using logical connections through network 330 to one or more remote computers, such as a server computing device.

In some implementations, server 310 can be an edge server which receives client requests and coordinates fulfillment of those requests through other servers, such as servers 320A-C. Server computing devices 310 and 320 can comprise computing systems, such as computing system 100. Though each server computing device 310 and 320 is displayed logically as a single server, server computing devices can each be a distributed computing environment encompassing multiple computing devices located at the same or at geographically disparate physical locations.

Client computing devices 305 and server computing devices 310 and 320 can each act as a server or client to other server/client device(s). Server 310 can connect to a database 315. Servers 320A-C can each connect to a corresponding database 325A-C. As discussed above, each server 310 or 320 can correspond to a group of servers, and each of these servers can share a database or can have their own database. Though databases 315 and 325 are displayed logically as single units, databases 315 and 325 can each be a distributed computing environment encompassing multiple computing devices, can be located within their corresponding server, or can be located at the same or at geographically disparate physical locations.

Network 330 can be a local area network (LAN), a wide area network (WAN), a mesh network, a hybrid network, or other wired or wireless networks. Network 330 may be the Internet or some other public or private network. Client computing devices 305 can be connected to network 330 through a network interface, such as by wired or wireless communication. While the connections between server 310 and servers 320 are shown as separate connections, these connections can be any kind of local, wide area, wired, or wireless network, including network 330 or a separate public or private network.

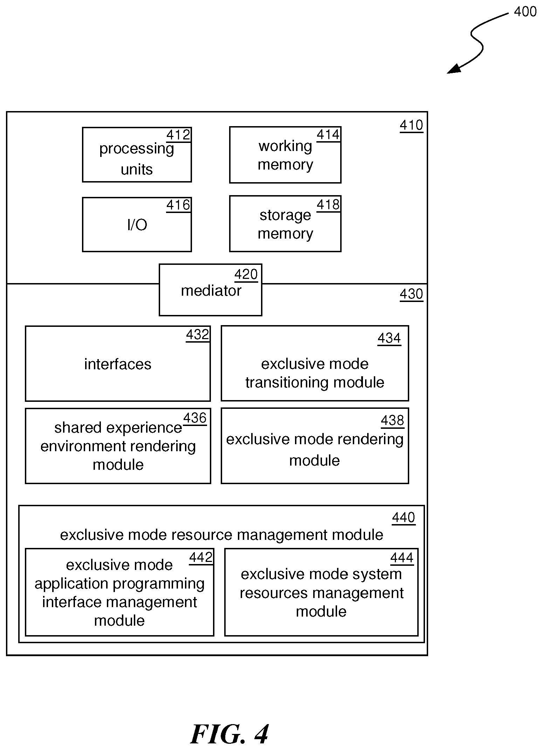

Figure 4 is a block diagram illustrating components 400 which, in some implementations, can be used in a system employing the disclosed technology. Components 400 can be included in one device of computing system 100 or can be distributed across multiple of the devices of computing system 100. The components 400 include hardware 410, mediator420, and specialized components 430. As discussed above, a system implementing the disclosed technology can use various hardware including processing units 412, working memory 414, input and output devices 416 (e.g., cameras, displays, IMU units, network connections, etc.), and storage memory 418. In various implementations, storage memory 418 can be one or more of: local devices, interfaces to remote storage devices, or combinations thereof. For example, storage memory 418 can be one or more hard drives or flash drives accessible through a system bus or can be a cloud storage provider (such as in storage 315 or 325) or other network storage accessible via one or more communications networks. In various implementations, components 400 can be implemented in a client computing device such as client computing devices 305 or on a server computing device, such as server computing device 310 or 320.

Mediator 420 can include components which mediate resources between hardware 410 and specialized components 430. For example, mediator 420 can include an operating system, services, drivers, a basic input output system (BIOS), controller circuits, or other hardware or software systems.

Specialized components 430 can include software or hardware configured to perform operations to transition an XR experience from operating within an augmented reality world environment where multiple artificial reality experiences may be operating, to an exclusive mode where a single XR experience can operate. Specialized components 430 can include exclusive mode transitioning module 434, a shared experience environment rendering module 436, exclusive mode rendering module 438, an exclusive mode resource management module 440, and components and APIs which can be used for providing user interfaces, transferring data, and controlling the specialized components, such as interfaces 432. In some implementations, components 400 can be in a computing system that is distributed across multiple computing devices or can be an interface to a server-based application executing one or more of specialized components 430. Although depicted as separate components, specialized components 430 may be logical or other nonphysical differentiations of functions and/or may be submodules or code-blocks of one or more applications.

When an XR experience transitions from operating within a shared experience environment to an exclusive mode, the exclusive mode transitioning module 434 can facilitate such transition. In some implementations, a user can interact with an XR experience through one or more augments associated with the XR experience when the XR experience is operating within the shared experience environment. Each XR experience can include multiple augments, where an augment includes one or more two-dimensional or three-dimensional entities that are spatially bound together and presented within the shared experience environment. As previously mentioned, when an XR experience transitions from operating within a shared experience environment to an exclusive mode, all non-transitioning XR experiences are placed in an inactive state such that each of the XR experiences, when in the inactive state, consume less resources (e.g., processing capacity, memory, etc.) than when the respective XR experience is operating within the shared experience environment in an active state. When in an inactive state, the XR experiences are hidden or otherwise not displayed to a user. A user generally cannot interact with an XR experience that is hidden or otherwise in an inactive state. In some implementations, the augments of each inactive XR experience are hidden. In some implementations, the augments of each inactive XR experience are minimized and/or moved, e.g., to be an icon in the corner of the user's viewable area or another dedicated inactive augment area. For example, the augments may have been 3D objects world-locked to a particular real-world location and the minimized versions may be 2D icons locked to a particular area in the user's field of view. Such minimized icons may be selected to transition back to the shared experience environment or to transition the XR experience associated with the selected icon to transition to exclusive mode. The exclusive mode transitioning module 434 can obtain state information, or data, for the XR experiences not transitioning to the exclusive mode and store, or otherwise, maintain such information. That is, the exclusive mode transitioning module 434 saves or otherwise maintains state information of one or more inactive XR experiences. In some implementations, state information for an XR experience can include, but is not limited to, augment data, entity data, coordinate location of the XR experience, configuration setting data, and any other data relied upon or utilized by the XR experience. In some implementations, an augment may further include content items that can be relevant to the artificial reality experience such as audio items, and or haptic items; state information for each content item may be managed and/or stored by the exclusive mode transitioning module 434.

When operating within the shared experience environment, an XR experience can be limited or otherwise constrained by an augment and/or the shared experience environment. That is, the shared experience environment and the augment of an XR experience can limit how the XR experience interacts with one or more objects in the real-world environment and/or one or more other XR experiences operating within the shared experience environment. For example, an XR experience may be bound by augment constraints or spatial rules existing within a shared experience environment. Further, an XR experience may be bound by other rules or constraints imposed by an augment associated with the XR experience. Accordingly, how an XR experience interacts, moves, accesses and provides information may be determined or otherwise enforced by the augment and/or the shared experience environment.

When the XR experience transitions to an exclusive mode, the XR experience may not be bound by all the constraints imposed by the shared experience environment. Further, because XR experiences operating in an exclusive mode do not have augments or have a larger augment into which it can write multiple entities, the entities of an XR experience are not bound by inter-augment interaction rules that previously constrained the XR experience when operating within the shared experience environment. Accordingly, the XR experience can have its own unique look and feel and can even be different from the look and feel of the XR experience when the XR experience operates within the shared experience environment.

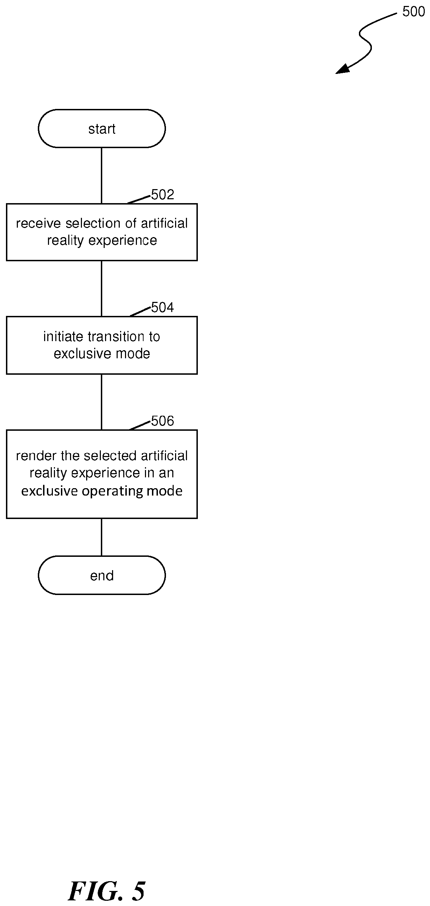

The XR experience operating in the exclusive mode can access data and/or information that was previously inaccessible to the XR experience when the XR experience was operating within the shared experience environment. For example, when operating within the shared experience environment, data and information about the real-world environment for example, may be provided by the shared experience environment. Accordingly, when the XR experience is to provide information to the XR device, such information may be first provided to the shared experience environment such that the shared experience environment acts as an intermediary between the XR experience and the XR device. Similarly, when the XR experience is to receive information from the XR device, such information may be first received at the a shared experience environment and then provided to the XR experience such that the shared experience environment acts as an intermediary between the XR experience and XR device. When the XR experience is in exclusive mode, the XR experience may have greater access to system elements and information, e.g., through APIs available to XR experience only when in exclusive mode. This allows the XR experience to access lower-level data, such as raw or unprocessed object tracking data from the XR device; whereas when the XR experience is operating within a shared experience environment, such tracking information may be abstracted and provided at a higher and more abstracted level to the XR experience via the shared experience environment and/or the augment associated with the XR experience. Further details regarding the processing for transitioning an XR experience from a shared experience environment to an exclusive mode are described with respect to FIGS. 5-9.

The shared experience environment rendering module 436 can render one or more XR experiences. The shared experience environment rendering module 436 can identify and render one or more augments of each XR experiences and can manage how each XR experience is displayed or rendered to the user when the XR experiences are operating within the shared experience environment. In some implementations, when an XR experience transitions to an exclusive mode, the shared experience environment rendering module 436 can prevent one or more XR experiences from being rendered.

The exclusive mode rendering module 438 can render an XR experience in exclusive mode. The exclusive mode rendering module 438 can identify and render one or more entities of the XR experience operating in the exclusive mode and can manage how each entity of the XR experience is displayed or rendered to the user. In some implementations, the XR experience can access the entire display provided by the XR device such that the exclusive mode rendering module 438 can manage which surfaces of the real-world environment an XR experience can interact with, thereby providing a more immersive experience for the user.

The specialized components 430 can also include an exclusive mode resource management module 440. The exclusive mode resource managing module 440 can manage access to one or more resources provided by an XR device. For example, the exclusive mode resource managing module 440 can include an exclusive mode application programming interface (API) management module 442. In some implementations, one or more APIs can be made accessible to the XR experience when the XR experience is operating in exclusive mode. Accordingly, the exclusive mode API management module 442 can restrict or prevent access to the API by the XR experience when the XR experience is operating within a shared experience environment. When the XR experience is operating in exclusive mode, the exclusive mode API management module 442 can allow or provide the XR experience access to the API.

The exclusive mode resource management module 440 can include an exclusive mode system resource management module 444. The exclusive mode system resource management module 444 can determine the resources that an XR experience can access when operating in exclusive mode. For example, the exclusive mode system resource management module 444 may determine one or more areas of an XR display that is accessible by an XR experience operating in exclusive mode. As another example, the exclusive mode system resource management module 444 can determine an availability and amount of hardware resources, such as but not limited to processing power and an available amount of memory, that can be accessed by an XR experience, where such resources would otherwise not be available to the XR experience if the XR experience was operating within a shared experience environment. That is, the XR experience generally shares the available system resources with other XR experiences when the XR experience operates within the shared experience environment. When the other XR experiences are hidden or otherwise placed into an inactive state, such XR experiences no longer require the same resources thereby making such resources available to the XR experience operating in exclusive mode.

Those skilled in the art will appreciate that the components illustrated in Figures 1-4 described above, and in each of the flow diagrams discussed below, may be altered in a variety of ways. For example, the order of the logic may be rearranged, substeps may be performed in parallel, illustrated logic may be omitted, other logic may be included, etc. In some implementations, one or more of the components described above can execute one or more of the processes described below.

Figure 5 is a flow diagram illustrating a process 500 used in some implementations for transitioning an XR experience operating within a shared experience environment to exclusive mode. In some implementations, process 500 can be performed by the exclusive mode transitioning module 434 in response to an action performed directly or indirectly by a user. For example, process 500 can be activated in response to a gesture performed by a user directed toward an XR experience augment operating within the shared experience environment. Alternatively, or in addition, process 500 can be performed in response to an XR device, and therefore the user, being in proximity to an object in a real-world environment. In some implementations, one or more blocks of process 500 can be performed by an XR device, such as an XR head-mounted display (HMD). In some implementations, one or more blocks of process 500 can be performed by another XR device in operable communication with an XR HMD, such as external local or cloud processing components.

At block 502, process 500 can receive a selection of an XR experience from within a shared experience environment operating on an XR device. Each XR experience can include multiple augments, where an augment includes one or more two-dimensional and three-dimensional entities that are spatially bound together and presented within the shared experience environment. In some implementations, the augment is presented as a bounding container such that the entities of the respective XR experience are confined within the bounding container. In addition to two-dimensional and three-dimensional entities, an augment may include other entities, such as audio and haptic entities. As previously discussed, when an XR experience transitions to exclusive mode, the XR experience no longer includes augments or may have a larger augment to write into which can include one or more entities that a user can interact with or that can be rendered to a display of the XR device. Accordingly, an XR experience can be developed to operate within the shared experience environment and to operate in exclusive mode.

At block 504, process 500 can initiate the transition of a selected XR experience from operating within the shared experience environment to exclusive mode. During the transition to exclusive mode, other XR experiences (e.g., the non-selected XR experiences) operating within the shared experience environment are hidden or otherwise placed into an inactive or suspended state. Thus, the selected XR experience will be the only XR experience operating on the XR device. As the selected XR experience is the only active XR experience operating on the XR device, the selected XR experience can be allocated resources that are otherwise unavailable to the selected XR experience when the selected XR experience is operating within the shared experience environment. For example, the selected XR experience can be assigned a greater amount of processing capacity associated with a central processing unit (CPU) or graphical processing unit (GPU) of the XR device. As another example, the selected XR experience can access a greater amount of memory of the XR device.

At block 506, process 500 can render the selected XR experience to the display of the XR device. For example, process 500 can render one or more entities of the selected XR experience onto a view of the real-world environment. In some implementations, the one or more entities can be the same as or similar to the one or more entities of the augment associated with the XR experience when the XR experience was operating within the shared experience environment. However, unlike the entities of the XR experience that are constrained when operating within the shared experience environment, the one or more entities of the XR experience are not constrained by an augment or may have a larger augment to write into than when they were in the shared experience environment. This can allow the one or more entities of the XR experience to interact with virtual surfaces of the real-world environment and other virtual objects or entities of the XR experience they could not when in the shared experience environment.

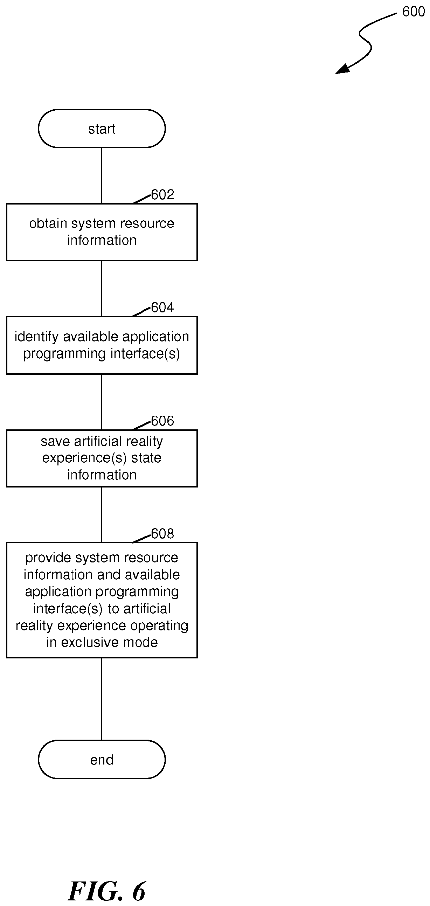

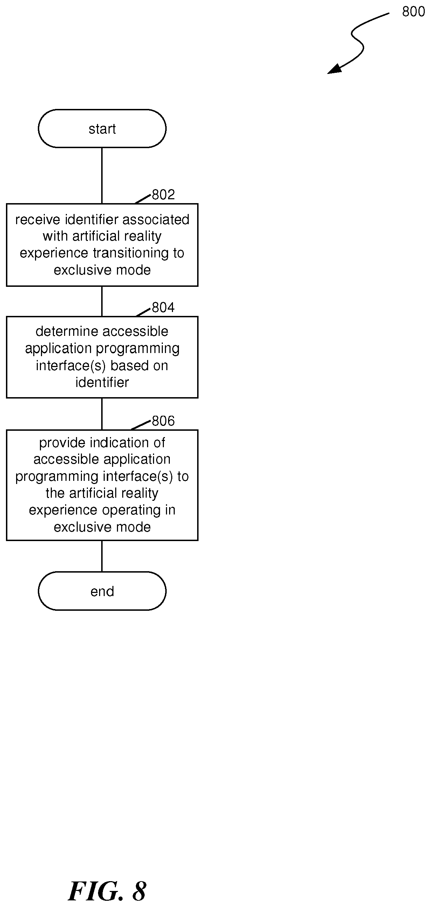

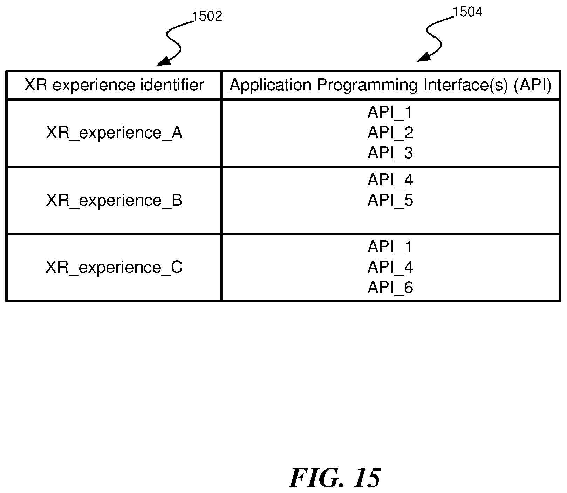

Figure 6 is a flow diagram illustrating a process 600 depicting additional details of block 504 of process 500. In some implementations, the transition of an XR experience from operating within a shared experience environment to exclusive mode may include identifying and then obtaining system resource information that is available to the XR experience. For example, at block 602, the process 600 can obtain system resource information, where system resource information may include but is not limited to one or more display resolutions at which an XR experience may operate, an amount of display area that the XR experience can utilize, an amount of processing power that can be made available to the XR experience, an amount of memory that can be made available to the XR experience, one or more services providing data and/or information about an external environment, such as location and tracking information, and other system resources made available by the XR device. At block 604, process 600 can determine which APIs may be available to the XR experience and provide such APIs to the XR experience. Alternatively, or in addition, process 600 can allow access to the or one or more APIs as described with respect to Figure 8 and Figure 15.

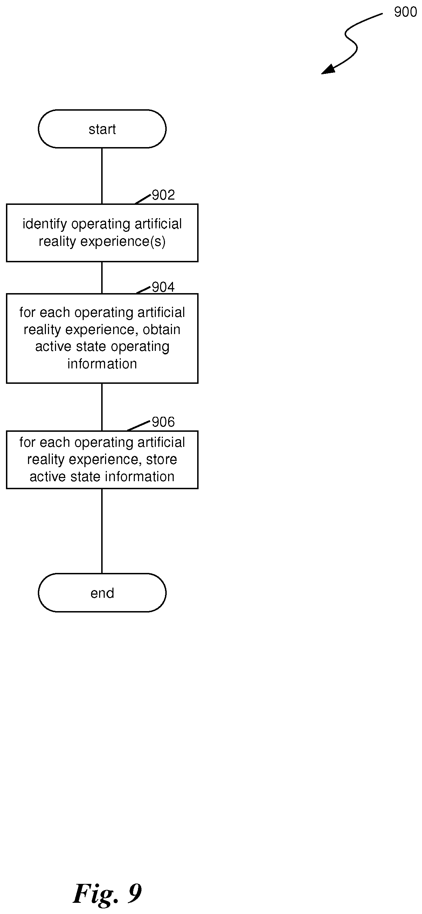

At block 606, process 600 can obtain and save state information for one or more XR experiences operating within the shared experience environment. As previously discussed, when in exclusive mode, an XR experience is the only active experience operating, allowing such XR experience to access additional resources and functionality that may otherwise be unavailable when the XR experience is operating within the shared experience environment. Accordingly, state information of the other XR experiences operating within the shared experience environment can be maintained or otherwise saved such that the XR experiences can return to their previous operating state or conditions when an XR experiences transitions from exclusive mode back to the shared experience environment. Additional details directed to saving state information of XR experiences operating within the shared experience environment are described with respect to Figure 9 and Figure 15. At block 608, process 600 can provide the system resource information obtained at block 602 and the APIs identified at 604 to the XR experience transitioning to exclusive mode.

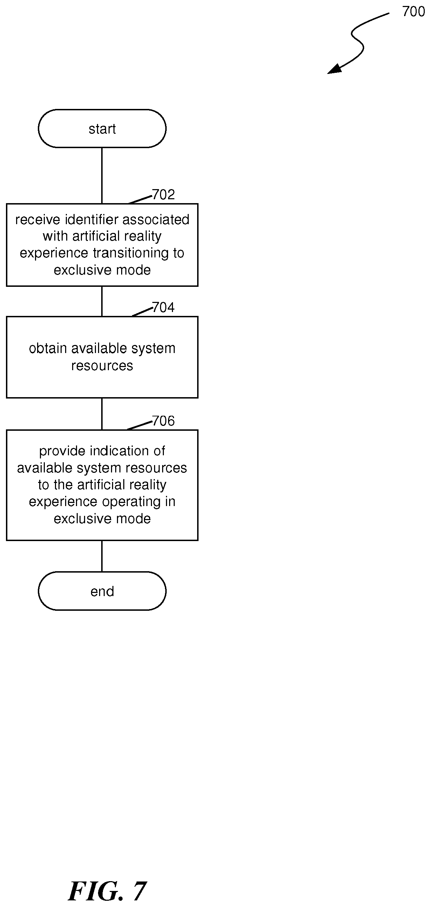

Figure 7 is a flow diagram illustrating a process 700 depicting additional details of block 602 of process 600. In some implementations, process 700 can be performed by an exclusive mode system resource management module 444 and may be performed in response to a query by an XR experience for information relating to available resources of the XR device or to the availability of system resources shared with the XR device. At block 702, process 700 receives an identifier associated with the selected XR experience that is transitioning from operating within the shared experience environment to exclusive mode. The identifier can be a globally unique identifier (e.g., GUID) that uniquely identifies the XR experience, or the identifier may be another type of identifier associated with the XR experience.

At block 704, process 700 can utilize the identifier to identify or otherwise determine which resources are available and/or allocated resources to the identified XR experience; in some implementations, process 700 can identify or otherwise determine an amount of resources that are available to the XR experience. As previously discussed, an XR experience operating in exclusive mode can be the only active XR experience operating; accordingly, the XR experience can be granted access to resources not otherwise used or reserved by the XR device (e.g., reserved resources required to operate an operating system and/or communication system of the XR device). In some implementations, the resources can correspond to an amount of the resource, such as but not limited to an amount of processing power, an amount of memory, an amount of power draw, an amount of display real estate, an amount of temperature rise, etc. Further, at block 704, process 700 can also identify or otherwise determine information from one or more XR device systems that may be accessible by the XR experience. For example, the XR experience can access low-level data or information (e.g., directly via permissions grated the XR experience in exclusive mode or through APIs made available to the XR experience in exclusive mode) associated with object tracking or object location; in some implementations such low-level data or information may be accessed directly from one or more sensors of the XR device.

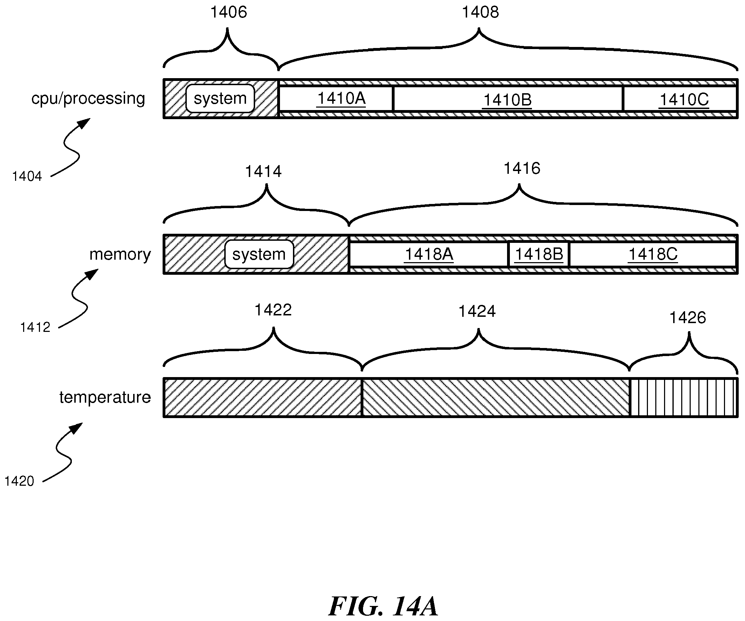

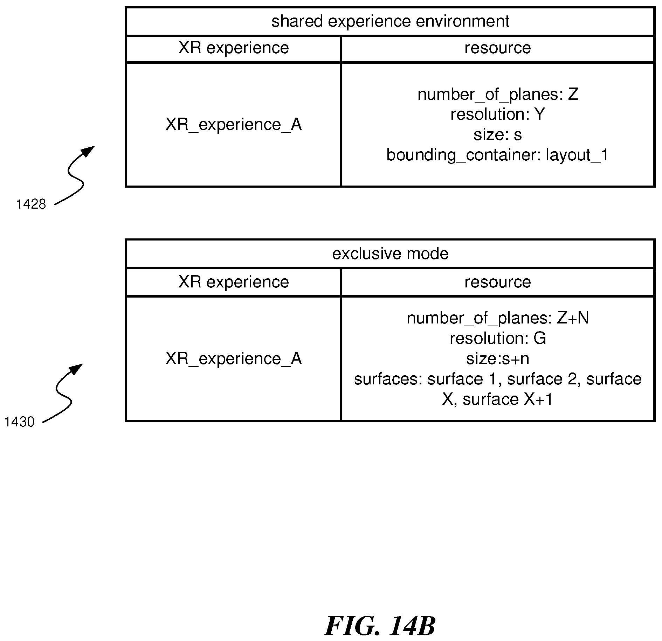

At block 706, process 700 can provide the indication of available system resources to the XR experience. In some implementations, such indication can be an explicit identification of which system resources are available to the XR experience. For example, the XR device can provide an indication as to how much available memory is available to the XR experience, how much processing power in terms of percentage of CPU or GPU is available to the XR experience, and which sensor and what type of information provided by the sensor is available to the XR experience. Of course, other resources may also be identified and provided to the XR experience. Further, the resources identified by process 700 can be resources that are not available to the XR experience when the XR experience is operating within the shared experience environment. In some cases, resources can be made available without specifically specifying the allocations to the XR experience, or by allowing the XR experience to query what resources are available to it at any given time. Additional details directed to resource availability are described with respect to Figure 14A and Figure 14B.

Figure 8 is a flow diagram illustrating a process 800 depicting additional details of block 604 of process 600. At block 802, process 800 receives an identifier associated with the selected XR experience that is transitioning from operating within the shared experience environment to the exclusive mode. The identifier can be a globally unique identifier (e.g., GUID) that uniquely identifies the XR experience, or the identifier may be another type of identifier associated with the XR experience.

At block 804, process 800 can utilize the identifier to identify or otherwise determine which APIs are to be made accessible to the XR experience or set permissions allowing the XR experience to call APIs reserved for exclusive mode. In some implementations, the determination may be based on an access control list for example, whereby the access control list utilizes the identifier to grant or limit access to a certain API.

At block 806, when the XR experience requested identification of available APIs, process 800 can provide a list of APIs accessible by the XR experience to the XR experience. In other implementations, the developer of the XR experience will be aware of the APIs available in exclusive mode, and thus can call them directly after API permissions have been set at block 804. Additional details directed to APIs accessible to the XR experience are described with respect to Figure 15.

Figure 9 is a flow diagram illustrating process 900 depicting additional details of block 606 of process 600. In some implementations, process 900 can be performed by the exclusive mode transitioning module 434 when the XR experience initiates or starts the transition to exclusive mode. At block 902, process 900 can identify XR experiences operating within a shared experience environment. For example, the process 900 can obtain an identifier associated with each of the operating XR experiences. At block 904, process 900 can obtain active state information for each of the active or operating XR experiences identified at block 902. In some implementations, the active state information can include, but is not limited to information concerning the augment(s) associated with the respective XR experiences, the entities associated with the respective augments, location and/or coordinate information for each augment and/or entities, and configuration information for each XR experience, etc. Of course, other information concerning the operation of the respective XR experience can be active state information.

At block 906, process 900 can store the active state information. In some implementations, process 900 can store the active state information in memory locations specific to the shared experience environment. Of course, the process 900 can store the active state information in any storage location that is part of or accessible by the XR device. For example, in some implementations the active state information can be located offsite or external to the XR device. Additional details directed to example information that can be stored as active state information are described with respect to Figure 15.

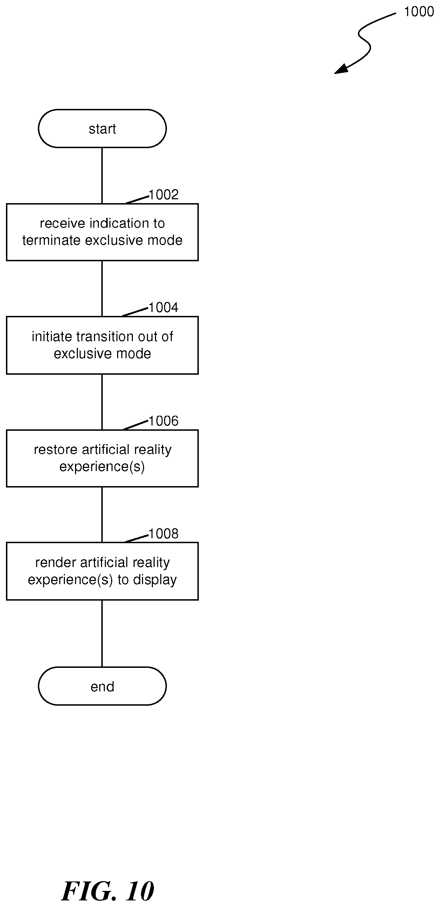

Figure 10 is a flow diagram illustrating a process 1000 used in some implementations for transitioning an XR experience from an exclusive mode to operating within a shared experience environment. Process 1000 can be activated or otherwise initiated when a user confirms that an XR experience is to exit the exclusive mode (e.g., through a command, activating an exit UI element, activating another XR experience, etc.) or when the XR experience in exclusive mode ends or reaches an internal command to exit exclusive mode. For example, at block 1002, process 1000 can receive an indication to exit exclusive mode for an XR experience. In examples, the indication may be directly or indirectly performed by a user. For instance, a user can confirm, using an onscreen control, for example, that the user wishes to exit exclusive mode. Alternatively, or in addition, a user, and therefore the XR device, can leave a specific location such that the user and/or XR device are no longer in proximity to a specified object in the real-world environment.

At block 1004, process 1000 initiates the transition out of exclusive mode and back to the shared experience environment. In some implementations, process 1000 obtains or otherwise restores active state information for each XR experience that was placed into an inactive, hidden, or non-operational state. For example, process 1000 accesses a memory location or otherwise makes a request for all XR experiences that were previously operating before a selected XR experience transitioned to exclusive mode. Accordingly, at block 1006, process 1000 restores each XR experience based on the recovered active state information. At block 1008, process 1000 can render each of the restored XR experiences to the shared experience environment.

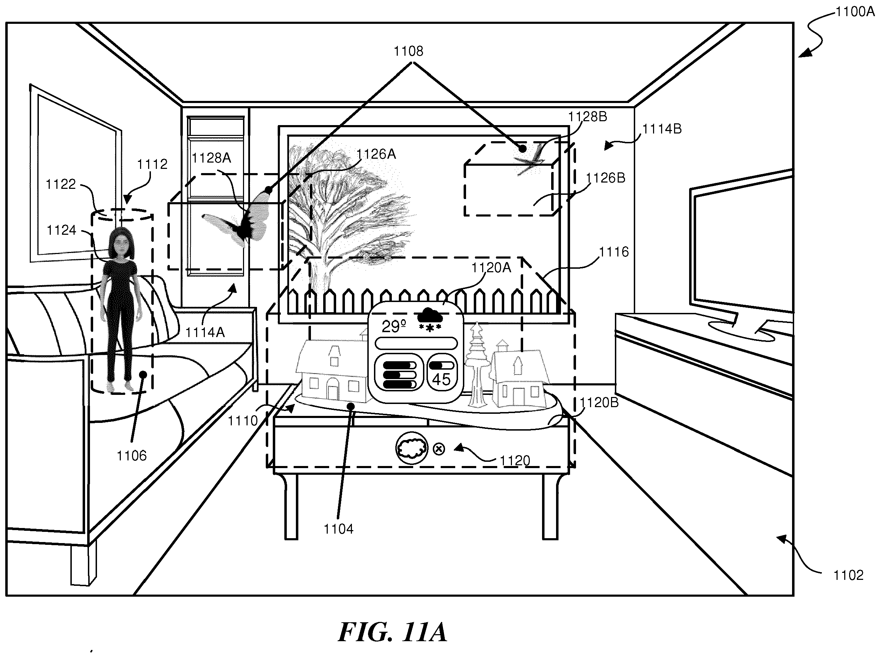

Figure 11A is a conceptual diagram illustrating an exemplary view 1100A from an XR device of various XR experiences 1104, 1106, and 1108 operating within a shared experience environment that is overlaid on a view of a real-world environment 1102 surrounding the XR device. As depicted in the exemplary view 1100A, each XR experience 1104, 1106, and 1108 can include one or more augments 1110, 1112, 1114A, and 1114B. An augment may be a standardized container for an experience operating within a shared experience environment, where the augment allows a user to understand how to manage and manipulate the augment in a consistent manner. Augments from different XR experiences populate a shared experience environment. For example, experience 1104 can include a single augment 1110; experience 1106 can include a single augment 1112; and experience 1108 can include augments 1114A and 1114B. Each of the augments can further include one or more entities, one or more bounding containers, and one or more controls. For example, augment 1110 can include bounding container 1116, entity 1118A, entity 1118B, and control 1120, where the control can be displayed when the augment is the subject of a user selected focus. As another example, augment 1112 can include bounding container 1122 and an entity 1124. As augment 1112 is not the subject of the user selected focus, the control associated with augment 1112 is not displayed. Similarly, augment 1114A can include bounding container 1126A having an entity 1128A, while augment 1114B can include a bounding container 1126B having an entity 1128B. As augments 1114A and 1114B are not the subject of the user selected focus, the controls associated with augments 1114A and/or 1114B may not be displayed.

While bounding containers 1116, 1122, 1126A, and 1126B are depicted in the exemplary view 1100A, such bounding containers may not be visible to a user; rather the bounding containers generally illustrate a volume of space belonging to the respective augment such that an XR experience can cause entities to be rendered within its own augment(s). An entity of an augment can include visual depictions, audio, and/or haptics, and can range in complexity from a static element, such as an image, to dynamic content having sophisticated interactivity. In addition to bounding containers, entities, and controls, each augment can further include one or more constraints, or rules, that provide a consistent manner for interacting with an XR experience's entities and/or limit the functionality of the XR experience to the bounding container. Accordingly, constraints or rules can determine if and how an entity of an augment for a first XR experience can interact with an entity of an augment for a second XR experience.

In addition, the one or more constraints, or rules of an augment can define how an entity interacts with a real-world environment and/or how an entity can utilize data provided by the shared experience environment. For example, the shared experience environment may access information or data concerning a location and/or track of an object in the real-world environment. Such information may be obtained from a sensor of the XR device, whereby the shared experience environment may construct an exact location and/or track of an object utilizing the information from the sensor. Accordingly, an XR experience that is to use such information is required to access the information from the shared experience environment, which may be abstracted or otherwise processed information or data from the XR device. For example, an XR experience operating within a shared experience environment may not be able to access sensor information from a sensor of an XR device; rather the XR experience can obtain processed sensor information which may include an exact location or a generated track of an object. In some implementations, the shared experience environment may generate processed sensor information.

As further depicted in the exemplary view 1100A, an augment of an XR experience can be located within the shared experience environment at a specified coordinate location. In some implementations however, the augment of the XR experience cannot interact with the real-world environment. That is, the XR experience, and therefore the augment, is unable to access surface information of one or more objects associated with the real-world environment 1102. For example, the augment 1112 may appear to be located on a couch depicted in the real-world environment 1102. Rather, the augment is moved to the location within the shared experience environment overlaying the couch and the entity 1124 may instead be bound or otherwise confined to the bounding container 1122. Accordingly, rather than standing on the couch, the entity 1124 is standing on or otherwise interacting with the bottom surface of the bounding container 1122.

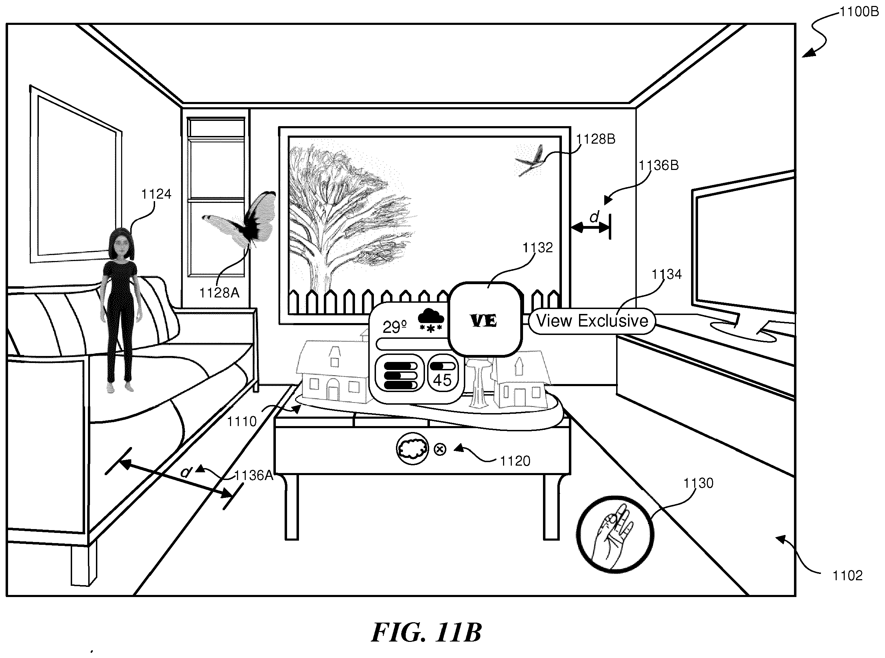

Figure 11B is a conceptual diagram illustrating an exemplary view 1100B from an XR device of an exclusive mode control. In some implementations, a user may perform a gesture 1130 which may cause an exclusive mode control 1132 of an augment that currently has a focus to be rendered and displayed by the XR device to the user. The exclusive mode control 1132 can include an exclusive mode tag or caption 1134 that provides additional information about the exclusive mode control 1132. As depicted in the exemplary view 1100B, a user may perform a gesture 1130 thereby causing the exclusive mode control 1132 associated with the augment 1110 of a weather XR experience to be launched and displayed to a user. In some implementations, the exclusive mode control 1132 is automatically launched when a user and/or XR device is determined to be within sufficient proximity to an object of the real-world environment. For example, when a user and/or XR device is within a threshold distance 1136A of the couch, the exclusive mode control 1132 is launched and displayed to the user. Similarly, when a user and/or XR device is within a threshold distance 1136B of the window, the exclusive mode control 1132 is launched and displayed to the user. In some examples, a user may perform another gesture 1130 to confirm the selection of the view exclusive control 1132 such that the XR experience transitions from the shared experience environment to an exclusive mode. In some implementations, other forms of selection or confirmation may be performed by the user. For example, a user may cause a ray associated with a hand track to hover on the view exclusive control 1132 thereby initiating the transition from the shared experience environment to the exclusive mode.

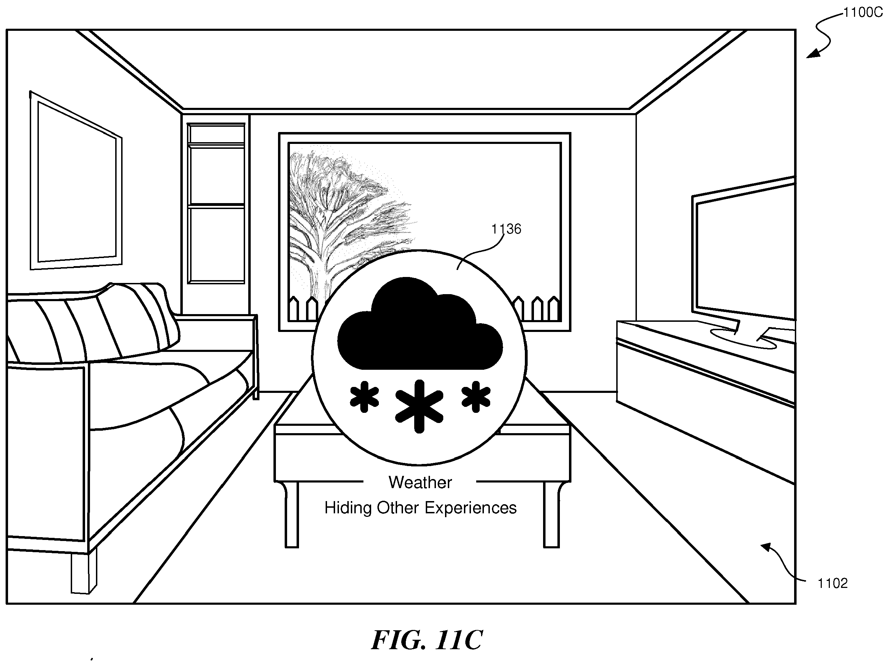

Figure 11C is a conceptual diagram illustrating an exemplary view 1100C from an XR device of an initiation of the exclusive mode. In some implementations, when the user selects the exclusive mode control 1132, the augments associated with the XR experiences operating within the shared experience environment may be hidden or otherwise placed into an inactive or suspended state. When hidden or otherwise placed into an inactive or suspended state, the XR experience utilizes less system resources, such as less processing capacity and less memory, than when the XR experience is operating within the shared experience environment. That is, all augments associated with one or more XR experiences are not displayed in the exemplary view 1100C. Rather, a transitioning status entity 1136 associated with the selected XR experience can be displayed by the XR device. As previously discussed, active state information for the experiences displayed within the shared experience environment is saved or otherwise stored upon initiating the transition to exclusive mode. For example, the coordinate location, configuration settings, and/or last interaction can be stored as active state information.

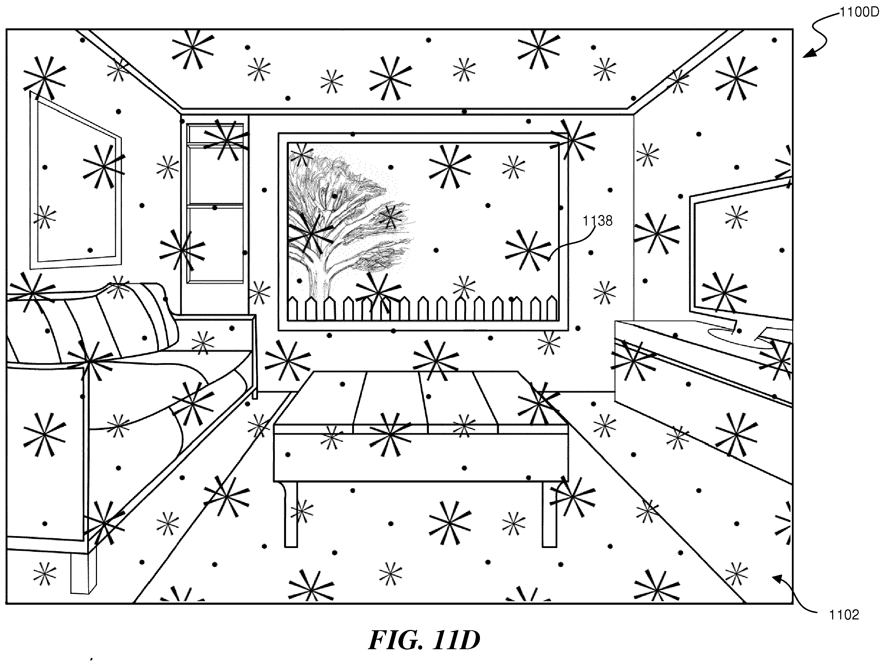

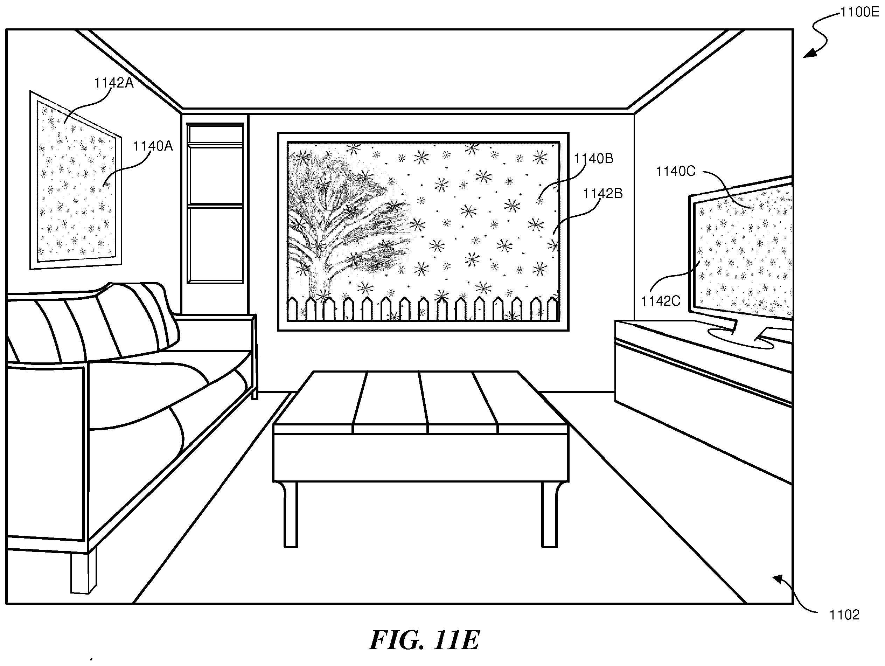

Figure 11D is a conceptual diagram illustrating an exemplary view 1100D from an XR device of an XR experience operating in an exclusive mode. As depicted in the exemplary view 1100D, the weather XR experience may overlay one or more entities 1138 onto a view of the real-world environment 1102. As previously discussed, the XR experience operating in exclusive mode can access additional resources that were previously unavailable to the XR experience operating within the shared experience environment. In some implementations, the additional resources accessible by the XR experience can be additional areas of the display to render entities. Stated another way, the XR experience can overlay entities on an entirety of the real-world environment 1102 (or, in some implementations, at least an expanded area as compared to the bounding area allocated in the shared experience environment). For example, the weather XR experience operating in exclusive mode and depicted in the exemplary view 1100D can access a substantial portion of the exemplary view 1100D from the XR device, thereby overlaying one or more entities of the XR experience over a substantial portion of the real-world environment. In some implementations, the XR experience can obtain surface information for one or more surfaces of objects in the real-world environment 1102 and then interact with the surface, as depicted in Figure 11E for example.

When the XR experience is not operating within a shared experience environment, the XR experience operating in exclusive mode may have heighted direct or API access to XR device resources and functions. For example, an XR experience operating in exclusive mode may directly access information or data, from a sensor of the XR device or a service of the XR device providing such information or data. In some implementations, access to the service or sensor can be controlled by making APIs accessible or otherwise available to the XR experience when operating in exclusive mode. For example, an XR experience can access object location and/or tracking data directly from a sensor of the XR device by accessing a service or otherwise interacting with an API associated with the sensor. Accordingly, the service or API associated with the sensor can provide data directly to the XR experience. In some implementations, the data can be unprocessed data or raw data from a sensor of the XR device.

Figure 11E is a conceptual diagram illustrating an exemplary view 1100E from an XR device of an XR experience operating in an exclusive mode. As depicted in the exemplary view 1100E, the weather XR experience may overlay one or more entities 1140A-1140C onto a view of the real-world environment 1102. As previously discussed, the XR experience operating in exclusive mode can have access to or otherwise interact with additional resources and functionality of an XR device that were previously unavailable to the XR experience operating within the shared experience environment. For example, an XR experience in a shared experience environment may only have access to information about the surfaces on which its augments are placed, while that XR experience in exclusive mode may have access to information about all the surfaces in the environment. As depicted in view 1100E, the XR experience operating in exclusive mode can obtain surface information of a real-world object and overlay one or more entities on the surface of the real-world object in the real-world environment 1102. For example, the XR experience can obtain surface information of a decoration 1142A, a window 1142B, and a television 1142C. The XR experience can then cause one or more entities 1140A, 1140B, and 1140C to be overlaid on the respective surfaces. Such surface information may be obtained from the XR device. Alternatively, or in addition, the XR experience can identify surfaces and generate such surface information. That is, the XR experience operating in exclusive mode can access additional processing capacity and memory and, in some instances, can perform resource intensive calculations and tasks that are not performed in a resource constrained environment, such as when the XR experience is operating within the confines of a shared experience environment.

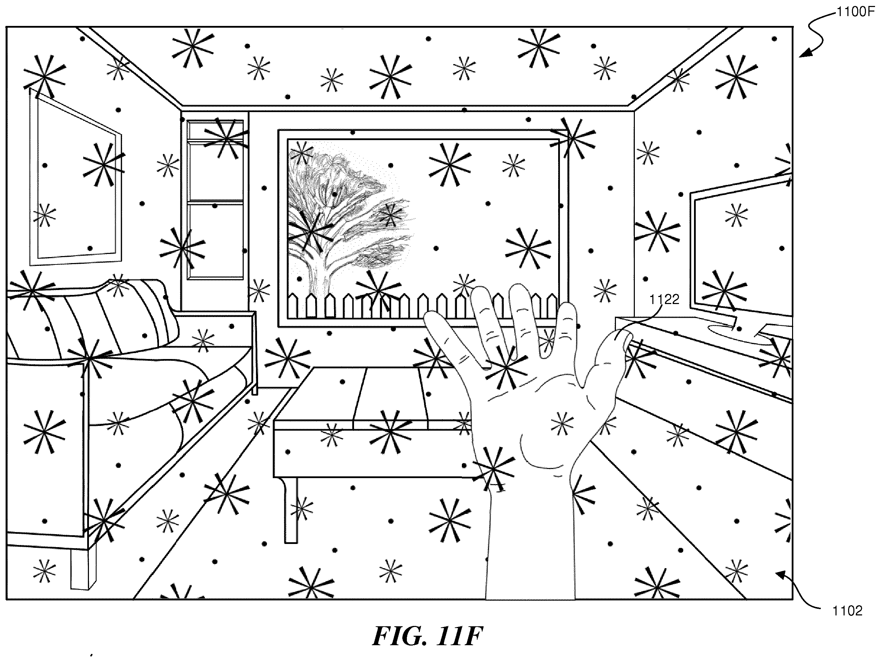

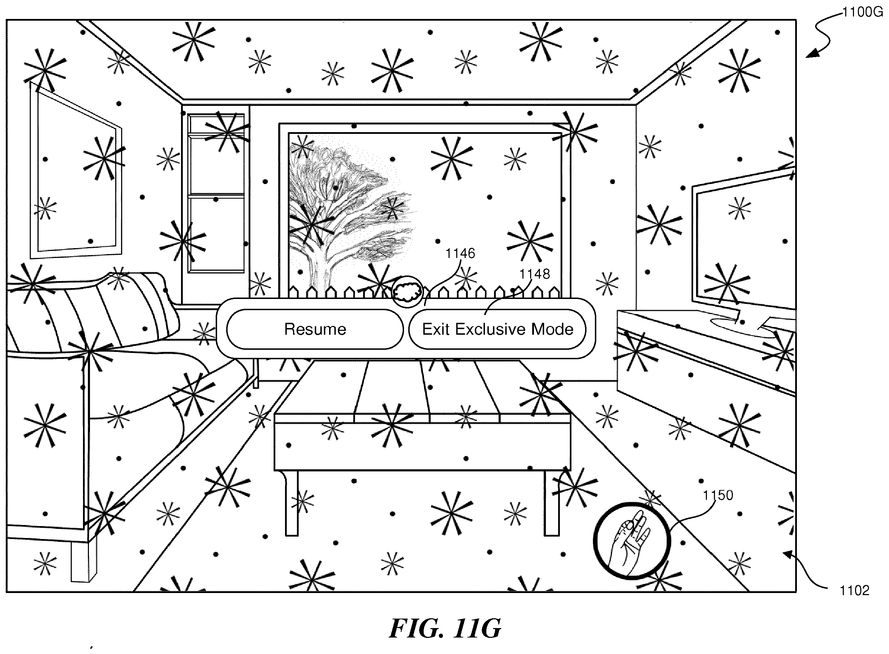

Figures 11F and 11G are conceptual diagrams illustrating exemplary views 1100F and 1100G from an XR device of an XR experience operating in an exclusive mode. In some implementations, a user may perform an initial gesture 1144 to cause an exit control menu 1146 to appear, as depicted in the exemplary view 1100G of Figure 11G. A user may perform a subsequent gesture 1150 or otherwise cause a menu item 1148 to be selected thereby initiating a transition of the XR experience from exclusive mode to a shared experience environment. Alternatively, or in addition, a user and therefore the XR device, can move such that the user and XR device are no longer in proximity to a real-world object in the real-world environment 1102. Accordingly, the transition from exclusive mode to the shared experience environment can be initiated based on the user and XR device leaving an area or otherwise exceeding a threshold distance from a real-world object.

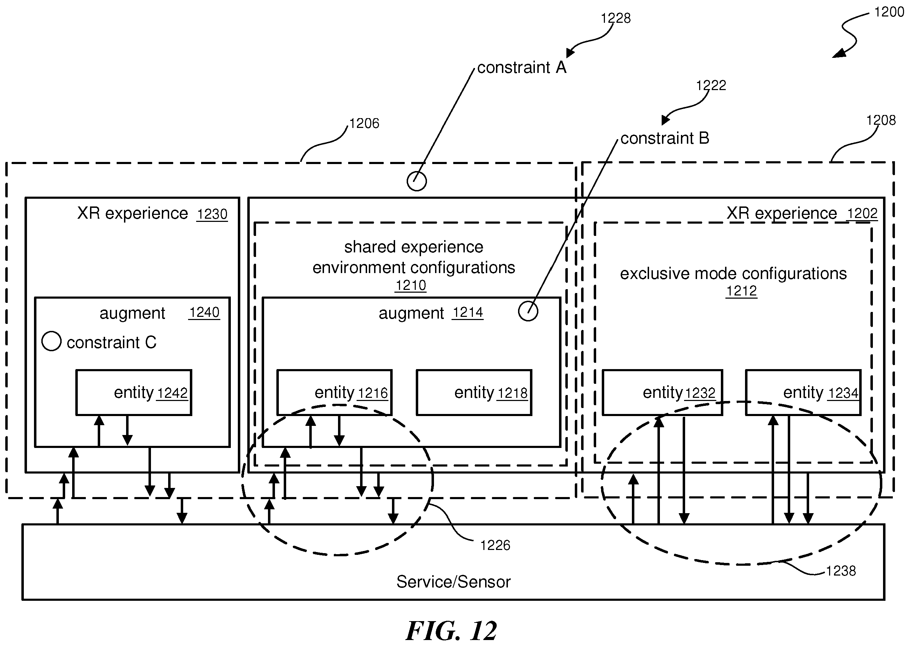

Figure 12 depicts a conceptual diagram 1200 illustrating XR experiences with respect to operating within a shared experience environment and/or exclusive mode. In some implementations and as previously described, an XR experience 1202 can operate within a shared experience environment 1206 or in exclusive mode 1208. Accordingly, the XR experience 1202 can include one or more configurations 1210 specific to operating within the shared experience environment 1206 and one or more configurations 1212 specific to operating in the exclusive mode 1208. When transitioning to exclusive mode, the XR experience can transition from the one or more configurations 1210 specific to operating within the shared experience environment 1206 to the one or more configurations 1212 specific to operating in the exclusive mode 1208.

The one or more configurations 1210 specific to operating within the shared experience environment 1206 can include one or more augments 1214. The augment 1214 can include one or more entities 1216 and 1218, where the entities can be two-dimensional or three-dimensional objects, audio objects, or haptic objects as previously described. The entities 1216 and 1218 can be spatially bound together and presented within the shared experience environment 1206. Further, when the XR experience 1202 operates within the shared experience environment 1206, the XR experience 1202 is limited by or otherwise constrained by one or more rules or constraints 1220 of the shared experience environment 1206. For example, the XR experience 1202 can be spatially constrained to a specific portion of the shared experience environment 1206. Moreover, when the XR experience 1202 operates within the shared experience environment 1206, each of the entities 1216 and 1218 associated with the augment 1214 of the XR experience 1202 is limited by or otherwise constrained by one or more rules or constraints 1222 of the augment 1214. As further depicted in Figure 12, when the XR experience 1202 operates within the shared experience environment 1206, input and output information of the XR experience is obtained or provided through the augment 1214 associated with the XR experience and in some instances, the shared experience environment 1206. That is, entity 1216 can obtain information or data by communicating or otherwise obtaining information from the augment 1214. Similarly, the augment 1214 can obtain information or data by communicating or otherwise obtaining information or data from the shared experience environment 1206. The shared experience environment 1206 can obtain information or data by communicating with a service or sensor 1224 or obtaining data or information directly from the service or sensor 1224. In some instances, entity 1216 can provide information or data by communicating or otherwise providing information to the augment 1214. Similarly, the augment 1214 can provide information or data by communicating or otherwise providing information or data to the shared experience environment 1206. The shared experience environment 1206 can provide information or data by communicating with a service or sensor 1224 or providing data or information directly to the service or sensor 1224. That is, the XR experience 1202 passes information to and receives information from augment 1214, as indicated by the lines of communication 1226.

Moreover, when the XR experience 1202 operates within the shared experience environment 1206, the XR experience 1202, including the augment 1214 and/or the entities 1216 and 1218, is limited by or otherwise constrained by one or more rules or constraints 1228 of the shared experience environment 1206. For example, the augment 1214 of the XR experience can be confined to a spatial location of the shared experience environment 1206. Similarly, the augment 1214 can be limited to what information and data is accessible as determined by the shared experience environment 1206.

When an XR experience transitions to exclusive mode, the augment and entities associated with the other XR experiences operating within the shared experience environment are hidden, minimized, or otherwise placed into an inactive or suspended operating state. For example, when the XR experience 1202 transitions to exclusive mode and utilizes the exclusive mode configurations 1212, the augment 1214 and entities 1216 and 1218 are hidden, converted into an inactive icon, or otherwise placed into an inactive or suspended operating state. In addition, other XR experiences, such as XR experience 1230, are also placed into an inactive or suspended operating state. In some implementations, entities associated with the XR experience are then activated such that a user can interact with the XR experience. For example, entities 1232 and 1234 are activated and can be rendered. In some implementations, one or more of the entities 1232 or 1234 may resemble or otherwise be the same as or similar to the one or more of the entities 1216 or 1218.

Unlike the augment 1214 and entities 1216 and 1218, when operating in exclusive mode 1208 and utilizing the exclusive mode configurations 1212 the entities 1232 and 1234 of the XR experience 1202 can have greater access to system resources, world state information, and system functions. As depicted in Figure 12, the XR experience 1202 and entities 1232 and 1234 can make API calls to communicate with the service/sensor 1224 as indicated by the lines of communication 1238, where those APIs were not available when the XR experience was in the shared experience environment. Accordingly, the XR experience 1202 when operating in exclusive mode can access services and sensor data for example that would otherwise be inaccessible by the XR experience 1202 operating within the shared experience environment.

Not all XR experiences are configured to transition to and operate in exclusive mode 1208. For example, the XR experience 1230, while having an augment 1240 with entity 1242, may only operate within the shared experience environment. Accordingly, the XR experience 1220 does not provide an option to transition to and operate in exclusive mode.

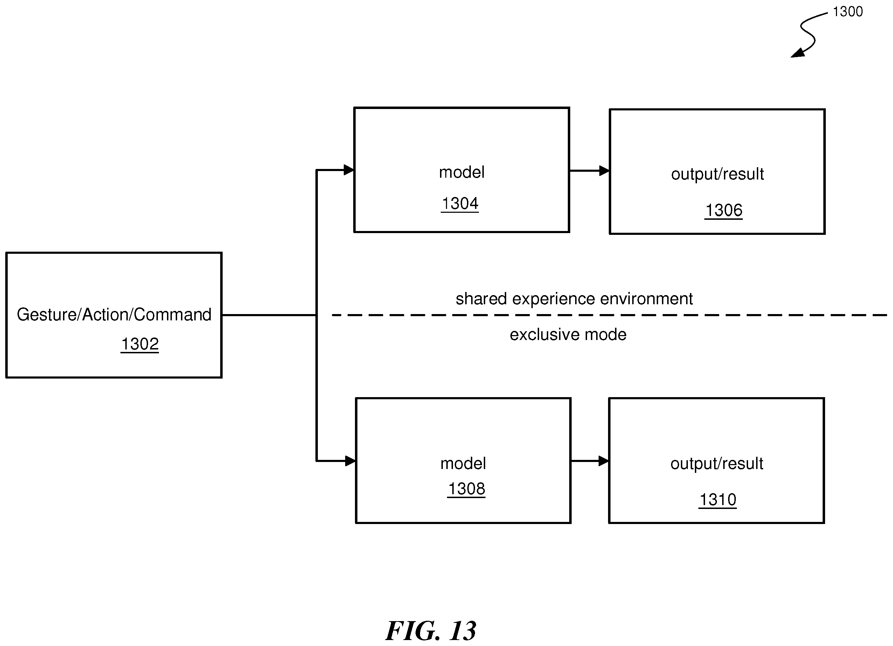

Figure 13 depicts a conceptual diagram 1300 illustrating action mapping differences for an XR experience operating within the shared experience environment versus operating in the exclusive mode. In some implementations, an action 1302, such as but not limited to a gesture or command, may be directed to an XR experience. In implementations where the XR experience is operating within the shared experience environment, action 1302 can be mapped to an output based on a model 1304. In implementations where the XR experience is operating in exclusive mode, action 1302 can be mapped to an output based on a model 1308 which is different from the model 1304. For example, model 1304 can be a first mapping of identified inputs such as gestures, motions, control activations, etc., to corresponding actions or signals provided to the XR experience and model 1308 can be a second different set of such mappings. Accordingly, the output/result of the mapping may provide an output or result 1306 that is different from an output or result 1310. Stated another way, an output or result of an action may be different depending on whether the XR experience is operating within a shared experience environment or in exclusive mode. As an example, a pinch gesture may indicate a selection within the shared experience environment while a pinch gesture may indicate a zoom out in the exclusive mode. Moreover, an augment or a shared experience environment may provide or otherwise be responsible for the model 1304, while the XR experience may provide or otherwise be responsible for the model 1308.

Figure 14A depicts additional details directed to determining resource availability when an XR experience transitions from operating within a shared experience environment to exclusive mode. In some implementations, when an XR experience transitions to exclusive mode, the XR experience can access or otherwise be provided with greater processing capacity 1404. For example, portion 1406 of a processing capacity associated with an XR device can be reserved specifically for the XR device, such as the operating system and other XR device related functions. When a shared experience environment is operating, portion 1408 of the processing capacity 1404 can be reserved or otherwise made available for one or more XR experiences. For example, portions 1410A, 1410B, and 1410C can be reserved or otherwise made available for different XR experiences. When an XR experience transitions to exclusive mode, portion 1408 can be reserved or otherwise made available to the XR experience operating in exclusive mode. As another example, when an XR experience transitions to exclusive mode, the XR experience can access or otherwise be provided with a greater amount of memory 1412. For example, portion 1414 of memory associated with an XR device can be reserved specifically for the XR device, such as the operating system and other XR device related functions. When a shared experience environment is operating, portion 1416 of the memory 1412 can be reserved or otherwise made available for one or more XR experiences. For example, portions 1418A, 1418B, and 1418C can be reserved or otherwise made available for different XR experiences. When an XR experience transitions to exclusive mode, portion 1416 can be reserved or otherwise made available to the XR experience operating in exclusive mode. Similarly, a resource of the XR device can be associated with temperature 1420. That is, when operating within the shared experience environment or exclusive mode, a portion 1422 of temperature rise of the XR device can be associated with general operating or system related functions, while a portion 1424 can be associated with a temperature rise of the XR device expected when one or more XR experiences are active. In some implementations, portion 1424 can grow or shrink depending on the number of active XR experiences; however, an upper range or temperature threshold 1426 may remain constant. On a per XR experience basis, an XR experience operating in exclusive mode can operate over a greater range of the portion 1424 than an XR experience operating within the shared experience environment. That is, an XR experience operating in exclusive mode may cause or operate over a greater temperature rise than an XR experience operating within the shared experience environment. Although Figure 14A depicts processing capacity, memory, and temperature, it should be understood that other system resources are also contemplated and greater amounts of such resources can be accessed by an XR experience operating in exclusive mode than an XR experience operating within a shared experience environment.

Figure 14B depicts additional details directed to resource availability and use for an XR experience operating within a shared experience environment and exclusive mode. As depicted in Figure 14B, an XR experience 1428 operating within the shared experience environment can be confined to an amount of resources that is less than an amount of resources otherwise available to the XR experience when the XR experience 1430 is operating in exclusive mode. As depicted in Figure 14B, each of the number planes, resolution, and surfaces may be greater for the XR experience 1430 that is operating in exclusive mode than when the XR experience is operating within the shared experience environment. Further, an XR experience can be limited by a resource, such as the bounding_container which may place dimension, size, and resolution restrictions on an XR experience when operating within the shared experience environment. In some implementations, the resources available to the XR experience 1430 may be directly provided to the XR resource, in the form of a list or table for example, such that the XR resource can monitor its own resource usage. Alternatively, or in addition, the XR device can monitor resource usage of the XR experience 1430, such that when an amount of a resource is met or exceeded, the XR device can cause the XR experience to degrade in operation or exit exclusive mode.

Figure 15 depicts additional details directed to determining API availability and/or access for an XR experience operating within an exclusive mode. As previously discussed, an exclusive mode API management module 442 can restrict or prevent access to an API by the XR experience when the XR experience is operating in a shared experience environment. When the XR experience is operating in the exclusive mode, the exclusive mode API management module 442 can allow or provide the XR experience access to the API. For example, the exclusive mode API management module 442 can set heightened API permissions as part of an exclusive mode transition and/or determine API availability in response to a query by an XR experience. For example, the API management module 442 can receive an identifier 1502 associated with an XR experience that is transitioning from the shared experience environment to the exclusive mode. The identifier 1502 can be a globally unique identifier (e.g., GUID) that uniquely identifies the XR experience, or the identifier may be another type of identifier associated with the XR experience. The exclusive mode API management module 442 can utilize the identifier to set API permissions and identify or otherwise determine which APIs 1504 are to be made accessible to the XR experience. In some implementations, the exclusive mode API management module 442 can determine access based on an access control list for example, whereby the access control list utilizes the identifier 1502 to grant or limit access to a certain API. Alternatively, or in addition, the exclusive mode API management module 442 can provide a list of APIs accessible by the XR experience to the XR experience. For example, the exclusive mode API management module 442 can provide a list of accessible API's 1504 associated with an identifier of the XR experience to the XR experience.

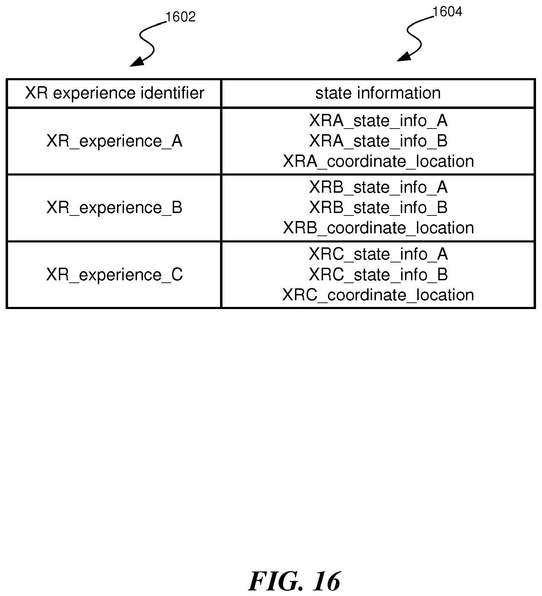

Figure 16 depicts additional details directed to saving state information when an XR experience transitions from operating within a shared experience environment to exclusive mode. For example, the exclusive mode transitioning module 434 can identify XR experiences operating within a shared experience environment. In some implementations, the exclusive mode transitioning module 434 can obtain an identifier 1602 associated with each of the operating XR experiences. The exclusive mode transitioning module 434 can obtain active state information 1604 for each of the active or operating XR experiences. In some implementations, the active state information can include, but is not limited to information concerning the augment(s) associated with the respective XR experiences, the entities associated with the respective augments, location and/or coordinate information for each augment and/or entities, configuration information for each XR experience, etc. Of course, other information concerning the operation of the respective XR experience can be considered to be active state information. The exclusive mode transitioning module 434 can store the active state information, for example as a table depicted in Figure 16.

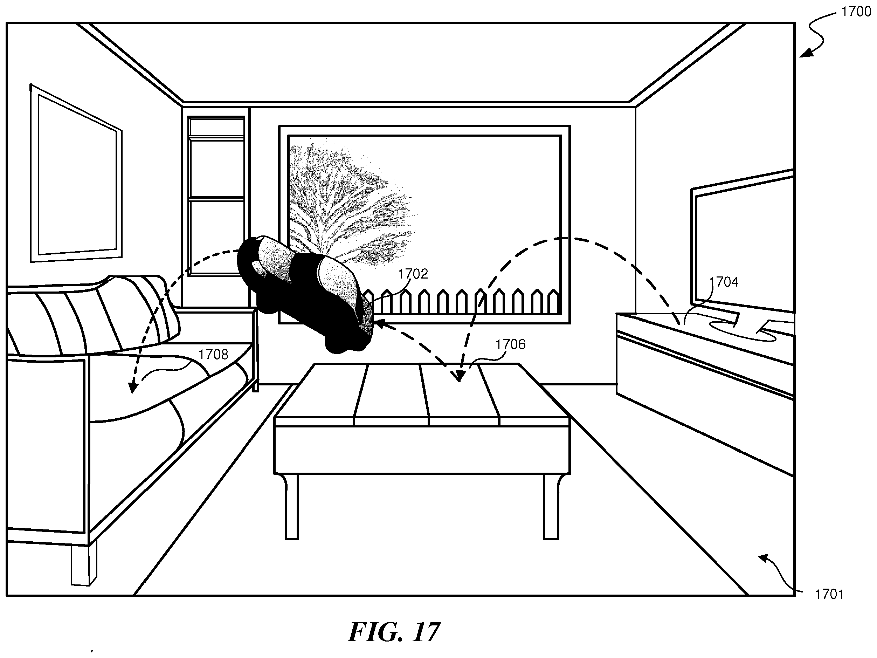

Figure 17 is a conceptual diagram illustrating an exemplary view 1700 from an XR device of an XR experience operating in an exclusive mode. As depicted in the exemplary view 1700, a car jumping experience may overlay an entity 1702 onto a view 1700 of a real-world environment 1701. As previously discussed, an XR experience operating in exclusive mode can have access to or otherwise interact with additional resources and functionality of an XR device that were previously unavailable to the XR experience operating within the shared experience environment. As depicted in view 1700, the XR experience operating in exclusive mode can obtain additional surface information associated with a real-world object, such as the furniture 1704, the table 1706, and the couch 1708, and allow the entity 1702 to interact with a surface associated with the real-world objects in the real-world environment 1701. For example, the XR experience can obtain surface information of table 1706 and enable the XR experience to interact with the surface information. That is, the entity 1702 can appear to bounce off of the surface of table 1706. Such surface information may be obtained from the XR device via an API call, e.g., to a function providing scene data. Alternatively, or in addition, the XR experience can identify surfaces and generate such surface information. That is, the XR experience operating in exclusive mode can access sensor data and additional processing capacity and memory and, in some instances, can perform resource intensive calculations and tasks that are not performed in a resource constrained environment, such as when the XR experience is operating within the confines of a shared experience environment.

Reference in this specification to "implementations" (e.g., "some implementations," "various implementations," "one implementation," "an implementation," etc.) means that a particular feature, structure, or characteristic described in connection with the implementation is included in at least one implementation of the disclosure. The appearances of these phrases in various places in the specification are not necessarily all referring to the same implementation, nor are separate or alternative implementations mutually exclusive of other implementations. Moreover, various features are described which may be exhibited by some implementations and not by others. Similarly, various requirements are described which may be requirements for some implementations but not for other implementations.

As used herein, being above a threshold means that a value for an item under comparison is above a specified other value, that an item under comparison is among a certain specified number of items with the largest value, or that an item under comparison has a value within a specified top percentage value. As used herein, being below a threshold means that a value for an item under comparison is below a specified other value, that an item under comparison is among a certain specified number of items with the smallest value, or that an item under comparison has a value within a specified bottom percentage value. As used herein, being within a threshold means that a value for an item under comparison is between two specified other values, that an item under comparison is among a middle-specified number of items, or that an item under comparison has a value within a middle-specified percentage range. Relative terms, such as high or unimportant, when not otherwise defined, can be understood as assigning a value and determining how that value compares to an established threshold. For example, the phrase "selecting a fast connection" can be understood to mean selecting a connection that has a value assigned corresponding to its connection speed that is above a threshold.

As used herein, the word "or" refers to any possible permutation of a set of items. For example, the phrase "A, B, or C" refers to at least one of A, B, C, or any combination thereof, such as any of: A; B; C; A and B; A and C; B and C; A, B, and C; or multiple of any item such as A and A; B, B, and C; A, A, B, C, and C; etc.

Although the subject matter has been described in language specific to structural features and/or methodological acts, it is to be understood that the subject matter defined in the appended claims is not necessarily limited to the specific features or acts described above. Specific embodiments and implementations have been described herein for purposes of illustration, but various modifications can be made without deviating from the scope of the embodiments and implementations within the scope of the appended claims. The specific features and acts described above are disclosed as example forms of implementing the claims that follow. Accordingly, the embodiments and implementations are not limited except as by the appended claims.

## Claims

1. A method for transitioning an application, comprising an artificial reality (XR) experience, from operating in a shared experience environment to operating in an exclusive mode, the method comprising:
rendering, by an XR device (200, 250), the shared experience environment comprising multiple augments (110, 1112, 1114A, 1114B), corresponding to multiple applications, wherein the multiple augments (110, 1112, 1114A, 1114B) comprise an augment, for the XR experience; and
in response to receiving an exclusive mode transition indication, transitioning the XR experience from operating in the shared experience environment to operating in the exclusive mode by:
causing the multiple augments (110, 1112, 1114A, 1114B), other than the augment for the XR experience, to enter an inactive state;
providing permissions for the XR experience to access exclusive mode application programing interfaces (APIs) that provide heightened access to system resources and environment information;
providing, to the XR experience, access to write content into an area comprising at least some locations previously occupied by the multiple augments (110, 1112, 1114A, 1114B) other than the augment; and
preventing the multiple applications, other than the XR experience, from writing content into the area.

2. The method of claim 1, wherein the environment information allows the XR experience to coordinate interactions between one or more entities (1140A, 1140B, 1140C) of the augment and multiple real-world surfaces.

3. The method of claim 2, wherein transitioning the XR experience from operating within the shared experience environment to operating in the exclusive mode comprises:
eliminating a constraint, imposed on the XR experience in the shared experience environment, on an area into which the XR experience can write content; and
permitting the XR experience to provide content on each of the multiple real-world surfaces.

4. The method of any preceding claim, wherein the augments entering the inactive state comprises the augments being hidden from view and restricting an amount of processing that can be performed by the corresponding applications.

5. The method of any preceding claim,
wherein the augment is a first augment;
wherein a second augment, of the multiple augments (110, 1112, 1114A, 1114B), is for a second XR experience within the shared experience environment;
wherein the second augment defines a second container having additional one or more entities; and
wherein the method further comprises:
obtaining state information for the second XR experience, the state information comprising an identifier associated with the second augment;
saving the state information for the second XR experience during the transitioning of the XR experience from operating in the shared experience environment to operating in exclusive mode; and
causing the second XR experience to enter an inactive state, wherein, when the second XR experience is in the inactive state, the second augment is hidden.

6. The method of claim 5, further comprising:
in response to receiving an indication to exit the exclusive mode, transitioning the XR experience from operating in the exclusive mode to operating in the shared experience environment by:
obtaining the state information for the second XR experience;
removing, from the XR experience, the access to write content into the entirety of the area; and
causing the second XR experience to enter an active state, wherein, when the second XR experience is in the active state, the second augment is rendered by the XR device (200, 250) in accordance with the state information for the second XR experience.

7. The method of claim 6, wherein transitioning the XR experience from operating in the exclusive mode to operating in the shared experience environment comprises:
removing the permissions for the XR experience to access the exclusive mode APIs.

8. The method of any preceding claim,
wherein transitioning the XR experience from operating within the shared experience environment to the exclusive mode comprises modifying an amount of system resources allocated to the XR experience; and
wherein a greater amount of system resources are allocated to the XR experience when the XR experience operates in exclusive mode than when the XR experience operates within the shared experience environment;
optionally, wherein the system resources comprise at least one of: allocated processing capacity, allocated memory usage, allocated display area usage, or any combination thereof.

9. The method of any preceding claim, wherein the augments entering the inactive state comprises the augments being transitioned to a minimized form and moved to a dedicated inactive augment area.

10. A computer-readable storage medium storing instructions that, when executed by a computing system, cause the computing system to perform a process for transitioning an application, comprising an artificial reality (XR) experience, from operating in a shared experience environment to operating in an exclusive mode, the process comprising:
rendering, by an XR device (200, 250), the shared experience environment comprising multiple augments (110, 1112, 1114A, 1114B), corresponding to multiple applications, wherein the multiple augments (110, 1112, 1114A, 1114B) comprise an augment, for the XR experience; and
in response to receiving an exclusive mode transition indication, transitioning the XR experience from operating in the shared experience environment to operating in the exclusive mode by:
causing the multiple augments (110, 1112, 1114A, 1114B), other than the augment for the XR experience, to enter an inactive state;
providing permissions for the XR experience to access exclusive mode application programing interfaces (APIs) that provide heightened access to system resources and environment information;
providing, to the XR experience, access to write content into an area comprising at least some locations previously occupied by the multiple augments (110, 1112, 1114A, 1114B) other than the augment; and
preventing the multiple applications, other than the XR experience, from writing content into the area.

11. The computer-readable storage medium of claim 10, wherein the environment information allows the XR experience to coordinate interactions between one or more entities (1140A, 1140B, 1140C) of the augment and multiple real-world surfaces;
optionally, wherein transitioning the XR experience from operating within the shared experience environment to operating in the exclusive mode comprises:
eliminating a constraint, imposed on the XR experience in the shared experience environment, on an area into which the XR experience can write content; and
permitting the XR experience to provide content on each of the multiple real-world surfaces.

12. The computer-readable storage medium of claim 10 or claim 11, wherein the augments entering the inactive state comprises the augments being hidden from view and restricting an amount of processing that can be performed by the corresponding applications.

13. The computer-readable storage medium of any one of claims 10 to 12,
wherein the augment is a first augment;
wherein a second augment, of the multiple augments (110, 1112, 1114A, 1114B), is for a second XR experience within the shared experience environment; and
wherein the process further comprises:
obtaining state information for the second XR experience, the state information comprising an identifier associated with the second augment;
saving the state information for the second XR experience during the transitioning of the XR experience from operating in the shared experience environment to operating in exclusive mode; and
causing the second XR experience to enter an inactive state, wherein, when the second XR experience is in the inactive state, the second augment is hidden;
optionally, wherein the process further comprises:
in response to receiving an indication to exit the exclusive mode, transitioning the XR experience from operating in the exclusive mode to operating in the shared experience environment by:
obtaining the state information for the second XR experience;
removing, from the XR experience, the access to write content into the entirety of the area; and
causing the second XR experience to enter an active state, wherein, when the second XR experience is in the active state, the second augment is rendered by the XR device (200, 250) in accordance with the state information for the second XR experience.

14. A computing system (100) for transitioning an application, comprising an artificial reality (XR) experience, from operating in a shared experience environment to operating in an exclusive mode, the computing system (100) comprising:
one or more processors (110); and
one or more memories (150, 160, 170) storing instructions that, when executed by the one or more processors (110), cause the computing system (100) to perform a process comprising:
rendering, by an XR device (200, 250), the shared experience environment comprising multiple augments (110, 1112, 1114A, 1114B), corresponding to multiple applications, wherein the multiple augments (110, 1112, 1114A, 1114B) comprise an augment, for the XR experience, having one or more entities (1140A, 1140B, 1140C); and
in response to receiving an exclusive mode transition indication, transitioning the XR experience from operating in the shared experience environment to operating in the exclusive mode by:
causing the multiple augments (110, 1112, 1114A, 1114B), other than the augment for the XR experience, to enter an inactive state;
providing permissions for the XR experience to access exclusive mode application programing interfaces (APIs) that provide heightened access to system resources and environment information;
providing, to the XR experience, access to write content into an area comprising at least some locations previously occupied by the multiple augments (110, 1112, 1114A, 1114B) other than the augment; and
preventing the multiple applications, other than the XR experience, from writing content into the area;
optionally, wherein the augments entering the inactive state comprises the augments being transitioned to a minimized form and moved to a dedicated inactive augment area.

15. The computing system (100) of claim 14,
wherein transitioning the XR experience from operating within the shared experience environment to the exclusive mode comprises modifying an amount of system resources allocated to the XR experience; and
wherein a greater amount of system resources are allocated to the XR experience when the XR experience operates in exclusive mode than when the XR experience operates within the shared experience environment;
optionally, wherein the system resources comprise at least one of: allocated processing capacity, allocated memory usage, allocated display area usage, or any combination thereof.

## Patentansprüche

1. Ein Verfahren zum Überführen einer Anwendung, die eine Erfahrung künstlicher Realität (XR) beinhaltet, vom Betrieb in einer Umgebung mit geteilter Erfahrung zum Betrieb in einem exklusiven Modus, wobei das Verfahren Folgendes beinhaltet:
Rendern, durch eine XR-Vorrichtung (200, 250), der Umgebung mit geteilter Erfahrung, die mehrere Erweiterungen (110, 1112, 1114A, 1114B) beinhaltet, die mehreren Anwendungen entsprechen, wobei die mehreren Erweiterungen (110, 1112, 1114A, 1114B) eine Erweiterung für die XR-Erfahrung beinhalten; und
als Reaktion auf das Empfangen einer Übergangsanzeige für den exklusiven Modus, Überführen der XR-Erfahrung vom Betrieb in der Umgebung mit geteilter Erfahrung zum Betrieb in dem exklusiven Modus durch Folgendes:
Bewirken, dass die mehreren Erweiterungen (110, 1112, 1114A, 1114B), die sich von der Erweiterung für die XR-Erfahrung unterscheiden, in einen inaktiven Zustand eintreten;
Bereitstellen von Berechtigungen für die XR-Erfahrung, um auf Anwendungsprogrammierschnittstellen (APIs) des exklusiven Modus zuzugreifen, die einen erhöhten Zugriff auf Systemressourcen und Umgebungsinformationen bereitstellen;
Bereitstellen, für die XR-Erfahrung, von Zugriff, um Inhalt in einen Bereich zu schreiben, der mindestens einige Orte beinhaltet, die zuvor durch die mehreren Erweiterungen (110, 1112, 1114A, 1114B), die sich von der Erweiterung unterscheiden, belegt wurden; und
Verhindern, dass die mehreren Anwendungen, die sich von der XR-Erfahrung unterscheiden, Inhalt in den Bereich schreiben.

2. Verfahren gemäß Anspruch 1, wobei die Umgebungsinformationen der XR-Erfahrung ermöglichen, Interaktionen zwischen einer oder mehreren Entitäten (1140A, 1140B, 1140C) der Erweiterung und mehreren realen Oberflächen zu koordinieren.

3. Verfahren gemäß Anspruch 2, wobei das Überführen der XR-Erfahrung vom Betrieb innerhalb der Umgebung mit geteilter Erfahrung zum Betrieb in dem exklusiven Modus Folgendes beinhaltet:
Beseitigen einer Beschränkung, die der XR-Erfahrung in der Umgebung mit geteilter Erfahrung auferlegt wird, auf einen Bereich, in den die XR-Erfahrung Inhalt schreiben kann; und
Gestatten, dass die XR-Erfahrung Inhalt auf jeder der mehreren realen Oberflächen bereitstellt.

4. Verfahren gemäß einem der vorhergehenden Ansprüche, wobei das Eintreten der Erweiterungen in den inaktiven Zustand beinhaltet, dass die Erweiterungen vor der Sicht verborgen sind und eine Menge an Verarbeitung, die durch die entsprechenden Anwendungen durchgeführt werden kann, beschränken.

5. Verfahren gemäß einem der vorhergehenden Ansprüche,
wobei die Erweiterung eine erste Erweiterung ist;
wobei eine zweite Erweiterung der mehreren Erweiterungen (110, 1112, 1114A, 1114B) für eine zweite XR-Erfahrung innerhalb der Umgebung mit geteilter Erfahrung ist;
wobei die zweite Erweiterung einen zweiten Container definiert, der eine oder mehrere zusätzliche Entitäten aufweist; und
wobei das Verfahren ferner Folgendes beinhaltet:
Erhalten von Zustandsinformationen für die zweite XR-Erfahrung, wobei die Zustandsinformationen eine Kennung beinhalten, die mit der zweiten Erweiterung assoziiert ist;
Speichern der Zustandsinformationen für die zweite XR-Erfahrung während des Überführens der XR-Erfahrung vom Betrieb in der Umgebung mit geteilter Erfahrung zum Betrieb in dem exklusiven Modus; und
Bewirken, dass die zweite XR-Erfahrung in einen inaktiven Zustand eintritt, wobei, wenn sich die zweite XR-Erfahrung in dem inaktiven Zustand befindet, die zweite Erweiterung verborgen ist.

6. Verfahren gemäß Anspruch 5, das ferner Folgendes beinhaltet:
als Reaktion auf das Empfangen einer Anzeige, den exklusiven Modus zu verlassen, Überführen der XR-Erfahrung vom Betrieb in dem exklusiven Modus zum Betrieb in der Umgebung mit geteilter Erfahrung durch Folgendes:
Erhalten der Zustandsinformationen für die zweite XR-Erfahrung;
Entfernen, aus der XR-Erfahrung, des Zugriffs, um Inhalt in die Gesamtheit des Bereichs zu schreiben; und
Bewirken, dass die zweite XR-Erfahrung in einen aktiven Zustand eintritt, wobei, wenn sich die zweite XR-Erfahrung in dem aktiven Zustand befindet, die zweite Erweiterung durch die XR-Vorrichtung (200, 250) gemäß den Zustandsinformationen für die zweite XR-Erfahrung gerendert wird.

7. Verfahren gemäß Anspruch 6, wobei das Überführen der XR-Erfahrung vom Betrieb in dem exklusiven Modus zum Betrieb in der Umgebung mit geteilter Erfahrung Folgendes beinhaltet:
Entfernen der Berechtigungen für die XR-Erfahrung, um auf die APIs des exklusiven Modus zuzugreifen.

8. Verfahren gemäß einem der vorhergehenden Ansprüche,
wobei das Überführen der XR-Erfahrung vom Betrieb innerhalb der Umgebung mit geteilter Erfahrung zu dem exklusiven Modus das Modifizieren einer Menge von Systemressourcen, die der XR-Erfahrung zugewiesen sind, beinhaltet; und
wobei der XR-Erfahrung eine größere Menge von Systemressourcen zugewiesen wird, wenn die XR-Erfahrung in dem exklusiven Modus betrieben wird, als wenn die XR-Erfahrung innerhalb der Umgebung mit geteilter Erfahrung betrieben wird;
wobei die Systemressourcen optional mindestens eines von Folgendem beinhalten: zugewiesene Verarbeitungskapazität, zugewiesene Speichernutzung, zugewiesene Anzeigebereichsnutzung oder eine beliebige Kombination davon.

9. Verfahren gemäß einem der vorhergehenden Ansprüche, wobei das Eintreten der Erweiterungen in den inaktiven Zustand beinhaltet, dass die Erweiterungen in eine minimierte Form überführt und in einen dedizierten inaktiven Erweiterungsbereich bewegt werden.

10. Ein computerlesbares Speichermedium, das Anweisungen speichert, die, wenn sie durch ein Rechensystem ausgeführt werden, das Rechensystem veranlassen, einen Prozess zum Überführen einer Anwendung, die eine Erfahrung künstlicher Realität (XR) beinhaltet, vom Betrieb in einer Umgebung mit geteilter Erfahrung zum Betrieb in einem exklusiven Modus durchzuführen, wobei der Prozess Folgendes beinhaltet:
Rendern, durch eine XR-Vorrichtung (200, 250), der Umgebung mit geteilter Erfahrung, die mehrere Erweiterungen (110, 1112, 1114A, 1114B) beinhaltet, die mehreren Anwendungen entsprechen, wobei die mehreren Erweiterungen (110, 1112, 1114A, 1114B) eine Erweiterung für die XR-Erfahrung beinhalten; und
als Reaktion auf das Empfangen einer Übergangsanzeige für den exklusiven Modus, Überführen der XR-Erfahrung vom Betrieb in der Umgebung mit geteilter Erfahrung zum Betrieb in dem exklusiven Modus durch Folgendes:
Bewirken, dass die mehreren Erweiterungen (110, 1112, 1114A, 1114B), die sich von der Erweiterung für die XR-Erfahrung unterscheiden, in einen inaktiven Zustand eintreten;
Bereitstellen von Berechtigungen für die XR-Erfahrung, um auf Anwendungsprogrammierschnittstellen (APIs) des exklusiven Modus zuzugreifen, die einen erhöhten Zugriff auf Systemressourcen und Umgebungsinformationen bereitstellen;
Bereitstellen, für die XR-Erfahrung, von Zugriff, um Inhalt in einen Bereich zu schreiben, der mindestens einige Orte beinhaltet, die zuvor durch die mehreren Erweiterungen (110, 1112, 1114A, 1114B), die sich von der Erweiterung unterscheiden, belegt wurden; und
Verhindern, dass die mehreren Anwendungen, die sich von der XR-Erfahrung unterscheiden, Inhalt in den Bereich schreiben.

11. Computerlesbares Speichermedium gemäß Anspruch 10, wobei die Umgebungsinformationen der XR-Erfahrung ermöglichen, Interaktionen zwischen einer oder mehreren Entitäten (1140A, 1140B, 1140C) der Erweiterung und mehreren realen Oberflächen zu koordinieren;
wobei das Überführen der XR-Erfahrung vom Betrieb innerhalb der Umgebung mit geteilter Erfahrung zum Betrieb in dem exklusiven Modus optional Folgendes beinhaltet:
Beseitigen einer Beschränkung, die der XR-Erfahrung in der Umgebung mit geteilter Erfahrung auferlegt wird, auf einen Bereich, in den die XR-Erfahrung Inhalt schreiben kann; und
Gestatten, dass die XR-Erfahrung Inhalt auf jeder der mehreren realen Oberflächen bereitstellt.

12. Computerlesbares Speichermedium gemäß Anspruch 10 oder Anspruch 11, wobei das Eintreten der Erweiterungen in den inaktiven Zustand beinhaltet, dass die Erweiterungen vor der Sicht verborgen sind und eine Menge an Verarbeitung, die durch die entsprechenden Anwendungen durchgeführt werden kann, beschränken.

13. Computerlesbares Speichermedium gemäß einem der Ansprüche 10 bis 12, wobei die Erweiterung eine erste Erweiterung ist;
wobei eine zweite Erweiterung der mehreren Erweiterungen (110, 1112, 1114A, 1114B) für eine zweite XR-Erfahrung innerhalb der Umgebung mit geteilter Erfahrung ist; und wobei der Prozess ferner Folgendes beinhaltet:
Erhalten von Zustandsinformationen für die zweite XR-Erfahrung, wobei die Zustandsinformationen eine Kennung beinhalten, die mit der zweiten Erweiterung assoziiert ist;
Speichern der Zustandsinformationen für die zweite XR-Erfahrung während des Überführens der XR-Erfahrung vom Betrieb in der Umgebung mit geteilter Erfahrung zum Betrieb in dem exklusiven Modus; und
Bewirken, dass die zweite XR-Erfahrung in einen inaktiven Zustand eintritt, wobei, wenn sich die zweite XR-Erfahrung in dem inaktiven Zustand befindet, die zweite Erweiterung verborgen ist;
wobei der Prozess optional ferner Folgendes beinhaltet:
als Reaktion auf das Empfangen einer Anzeige, den exklusiven Modus zu verlassen, Überführen der XR-Erfahrung vom Betrieb in dem exklusiven Modus zum Betrieb in der Umgebung mit geteilter Erfahrung durch Folgendes:
Erhalten der Zustandsinformationen für die zweite XR-Erfahrung;
Entfernen, aus der XR-Erfahrung, des Zugriffs, um Inhalt in die Gesamtheit des Bereichs zu schreiben; und
Bewirken, dass die zweite XR-Erfahrung in einen aktiven Zustand eintritt, wobei, wenn sich die zweite XR-Erfahrung in dem aktiven Zustand befindet, die zweite Erweiterung durch die XR-Vorrichtung (200, 250) gemäß den Zustandsinformationen für die zweite XR-Erfahrung gerendert wird.

14. Ein Rechensystem (100) zum Überführen einer Anwendung, die eine Erfahrung künstlicher Realität (XR) beinhaltet, vom Betrieb in einer Umgebung mit geteilter Erfahrung zum Betrieb in einem exklusiven Modus, wobei das Rechensystem (100) Folgendes beinhaltet:
einen oder mehrere Prozessoren (110); und
einen oder mehrere Speicher (150, 160, 170), die Anweisungen speichern, die, wenn sie durch den einen oder die mehreren Prozessoren (110) ausgeführt werden, das Rechensystem (100) veranlassen, einen Prozess durchzuführen, der Folgendes beinhaltet:
Rendern, durch eine XR-Vorrichtung (200, 250), der Umgebung mit geteilter Erfahrung, die mehrere Erweiterungen (110, 1112, 1114A, 1114B) beinhaltet, die mehreren Anwendungen entsprechen, wobei die mehreren Erweiterungen (110, 1112, 1114A, 1114B) eine Erweiterung für die XR-Erfahrung beinhalten, die eine oder mehrere Entitäten (1140A, 1140B, 1140C) aufweist; und
als Reaktion auf das Empfangen einer Übergangsanzeige für den exklusiven Modus, Überführen der XR-Erfahrung vom Betrieb in der Umgebung mit geteilter Erfahrung zum Betrieb in dem exklusiven Modus durch Folgendes:
Bewirken, dass die mehreren Erweiterungen (110, 1112, 1114A, 1114B), die sich von der Erweiterung für die XR-Erfahrung unterscheiden, in einen inaktiven Zustand eintreten;
Bereitstellen von Berechtigungen für die XR-Erfahrung, um auf Anwendungsprogrammierschnittstellen (APIs) des exklusiven Modus zuzugreifen, die einen erhöhten Zugriff auf Systemressourcen und Umgebungsinformationen bereitstellen;
Bereitstellen, für die XR-Erfahrung, von Zugriff, um Inhalt in einen Bereich zu schreiben, der mindestens einige Orte beinhaltet, die zuvor durch die mehreren Erweiterungen (110, 1112, 1114A, 1114B), die sich von der Erweiterung unterscheiden, belegt wurden; und
Verhindern, dass die mehreren Anwendungen, die sich von der XR-Erfahrung unterscheiden, Inhalt in den Bereich schreiben;
wobei das Eintreten der Erweiterungen in den inaktiven Zustand optional beinhaltet, dass die Erweiterungen in eine minimierte Form überführt und in einen dedizierten inaktiven Erweiterungsbereich bewegt werden.

15. Rechensystem (100) gemäß Anspruch 14,
wobei das Überführen der XR-Erfahrung vom Betrieb innerhalb der Umgebung mit geteilter Erfahrung zu dem exklusiven Modus das Modifizieren einer Menge von Systemressourcen, die der XR-Erfahrung zugewiesen sind, beinhaltet; und
wobei der XR-Erfahrung eine größere Menge von Systemressourcen zugewiesen wird, wenn die XR-Erfahrung in dem exklusiven Modus betrieben wird, als wenn die XR-Erfahrung innerhalb der Umgebung mit geteilter Erfahrung betrieben wird;
wobei die Systemressourcen optional mindestens eines von Folgendem beinhalten:
zugewiesene Verarbeitungskapazität, zugewiesene Speichernutzung, zugewiesene Anzeigebereichsnutzung oder eine beliebige Kombination davon.

## Revendications

1. Un procédé pour faire passer une application, comprenant une expérience de réalité artificielle (XR), du fait d'être exploitée dans un environnement d'expériences partagé au fait d'être exploitée dans un mode exclusif, le procédé comprenant le fait :
d'effectuer le rendu, par un dispositif XR (200, 250), de l'environnement d'expériences partagé comprenant de multiples augmentations (110, 1112, 1114A, 1114B),
correspondant à de multiples applications, où les multiples augmentations (110, 1112, 1114A, 1114B) comprennent une augmentation, pour l'expérience XR ; et
en réponse au fait de recevoir une indication de passage au mode exclusif, de faire passer l'expérience XR du fait d'être exploitée dans l'environnement d'expériences partagé au fait d'être exploitée dans le mode exclusif par le fait :
d'amener les multiples augmentations (110, 1112, 1114A, 1114B), autres que l'augmentation pour l'expérience XR, à entrer dans un état inactif ;
de fournir des autorisations à l'expérience XR d'accéder à des interfaces de programmation d'application (API) de mode exclusif qui fournissent un accès renforcé à des ressources système et à des informations d'environnement ;
de fournir, à l'expérience XR, un accès en écriture de contenu dans une zone comprenant au moins certains emplacements précédemment occupés par les multiples augmentations (110, 1112, 1114A, 1114B) autres que l'augmentation ; et
d'empêcher les multiples applications, autres que l'expérience XR, d'écrire du contenu dans la zone.

2. Le procédé de la revendication 1, où les informations d'environnement permettent à l'expérience XR de coordonner des interactions entre une ou plusieurs entités (1140A, 1140B, 1140C) de l'augmentation et de multiples surfaces du monde réel.

3. Le procédé de la revendication 2, où le fait de faire passer l'expérience XR du fait d'être exploitée au sein de l'environnement d'expériences partagé au fait d'être exploitée dans le mode exclusif comprend le fait :
d'éliminer une contrainte, imposée à l'expérience XR dans l'environnement d'expériences partagé, sur une zone dans laquelle l'expérience XR peut écrire du contenu ; et
d'autoriser l'expérience XR à fournir du contenu sur chacune des multiples surfaces du monde réel.

4. Le procédé de n'importe quelle revendication précédente, où le fait pour les augmentations d'entrer dans l'état inactif comprend le fait pour les augmentations d'être masquées à la vue et le fait de restreindre une quantité de traitement qui peut être effectué par les applications correspondantes.

5. Le procédé de n'importe quelle revendication précédente,
où l'augmentation est une première augmentation ;
où une deuxième augmentation, parmi les multiples augmentations (110, 1112, 1114A, 1114B), est destinée à une deuxième expérience XR au sein de l'environnement d'expériences partagé ;
où la deuxième augmentation définit un deuxième conteneur ayant une ou plusieurs entités supplémentaires ; et
où le procédé comprend en outre le fait :
d'obtenir des informations d'état pour la deuxième expérience XR, les informations d'état comprenant un identifiant associé à la deuxième augmentation ;
de sauvegarder les informations d'état pour la deuxième expérience XR pendant que l'expérience XR passe du fait d'être exploitée dans l'environnement d'expériences partagé au fait d'être exploitée en mode exclusif ; et
d'amener la deuxième expérience XR à entrer dans un état inactif, où, lorsque la deuxième expérience XR est dans l'état inactif, la deuxième augmentation est masquée.

6. Le procédé de la revendication 5, comprenant en outre :
en réponse au fait de recevoir une indication visant à quitter le mode exclusif, le fait de faire passer l'expérience XR du fait d'être exploitée dans le mode exclusif au fait d'être exploitée dans l'environnement d'expériences partagé par le fait :
d'obtenir les informations d'état pour la deuxième expérience XR ;
de retirer, à l'expérience XR, l'accès en écriture de contenu dans la totalité de la zone ; et
d'amener la deuxième expérience XR à entrer dans un état actif, où, lorsque la deuxième expérience XR est dans l'état actif, la deuxième augmentation fait l'objet d'un rendu par le dispositif XR (200, 250) conformément aux informations d'état pour la deuxième expérience XR.

7. Le procédé de la revendication 6, où le fait de faire passer l'expérience XR du fait d'être exploitée dans le mode exclusif au fait d'être exploitée dans l'environnement d'expériences partagé comprend le fait :
de retirer les autorisations à l'expérience XR d'accéder aux API de mode exclusif.

8. Le procédé de n'importe quelle revendication précédente,
où le fait de faire passer l'expérience XR du fait d'être exploitée au sein de l'environnement d'expériences partagé au mode exclusif comprend le fait de modifier une quantité de ressources système allouées à l'expérience XR ; et
où une quantité plus importante de ressources système est allouée à l'expérience XR lorsque l'expérience XR est exploitée en mode exclusif que lorsque l'expérience XR est exploitée au sein de l'environnement d'expériences partagé ;
facultativement, où les ressources système comprennent au moins un élément parmi :
une capacité de traitement allouée, un usage de mémoire alloué, un usage de zone d'affichage alloué, ou toute combinaison de ceux-ci.

9. Le procédé de n'importe quelle revendication précédente, où le fait pour les augmentations d'entrer dans l'état inactif comprend le fait pour les augmentations de passer à une forme réduite et d'être déplacées vers une zone dédiée aux augmentations inactives.

10. Un support de stockage lisible par ordinateur stockant des instructions qui, lorsqu'elles sont exécutées par un système informatique, amènent le système informatique à effectuer un processus pour faire passer une application, comprenant une expérience de réalité artificielle (XR), du fait d'être exploitée dans un environnement d'expériences partagé au fait d'être exploitée dans un mode exclusif, le processus comprenant le fait :
d'effectuer le rendu, par un dispositif XR (200, 250), de l'environnement d'expériences partagé comprenant de multiples augmentations (110, 1112, 1114A, 1114B),
correspondant à de multiples applications, où les multiples augmentations (110, 1112, 1114A, 1114B) comprennent une augmentation, pour l'expérience XR ; et
en réponse au fait de recevoir une indication de passage au mode exclusif, de faire passer l'expérience XR du fait d'être exploitée dans l'environnement d'expériences partagé au fait d'être exploitée dans le mode exclusif par le fait :
d'amener les multiples augmentations (110, 1112, 1114A, 1114B), autres que l'augmentation pour l'expérience XR, à entrer dans un état inactif ;
de fournir des autorisations à l'expérience XR d'accéder à des interfaces de programmation d'application (API) de mode exclusif qui fournissent un accès renforcé à des ressources système et à des informations d'environnement ;
de fournir, à l'expérience XR, un accès en écriture de contenu dans une zone comprenant au moins certains emplacements précédemment occupés par les multiples augmentations (110, 1112, 1114A, 1114B) autres que l'augmentation ; et
d'empêcher les multiples applications, autres que l'expérience XR, d'écrire du contenu dans la zone.

11. Le support de stockage lisible par ordinateur de la revendication 10, où les informations d'environnement permettent à l'expérience XR de coordonner des interactions entre une ou plusieurs entités (1140A, 1140B, 1140C) de l'augmentation et de multiples surfaces du monde réel ;
facultativement, où le fait de faire passer l'expérience XR du fait d'être exploitée au sein de l'environnement d'expériences partagé au fait d'être exploitée dans le mode exclusif comprend le fait :
d'éliminer une contrainte, imposée à l'expérience XR dans l'environnement d'expériences partagé, sur une zone dans laquelle l'expérience XR peut écrire du contenu ; et
d'autoriser l'expérience XR à fournir du contenu sur chacune des multiples surfaces du monde réel.

12. Le support de stockage lisible par ordinateur de la revendication 10 ou de la revendication 11, où le fait pour les augmentations d'entrer dans l'état inactif comprend le fait pour les augmentations d'être masquées à la vue et le fait de restreindre une quantité de traitement qui peut être effectué par les applications correspondantes.

13. Le support de stockage lisible par ordinateur de l'une quelconque des revendications 10 à 12, où l'augmentation est une première augmentation ;
où une deuxième augmentation, parmi les multiples augmentations (110, 1112, 1114A, 1114B), est destinée à une deuxième expérience XR au sein de l'environnement d'expériences partagé ; et
où le processus comprend en outre le fait :
d'obtenir des informations d'état pour la deuxième expérience XR, les informations d'état comprenant un identifiant associé à la deuxième augmentation ;
de sauvegarder les informations d'état pour la deuxième expérience XR pendant que l'expérience XR passe du fait d'être exploitée dans l'environnement d'expériences partagé au fait d'être exploitée en mode exclusif ; et
d'amener la deuxième expérience XR à entrer dans un état inactif, où, lorsque la deuxième expérience XR est dans l'état inactif, la deuxième augmentation est masquée ;
facultativement, où le processus comprend en outre :
en réponse au fait de recevoir une indication visant à quitter le mode exclusif, le fait de faire passer l'expérience XR du fait d'être exploitée dans le mode exclusif au fait d'être exploitée dans l'environnement d'expériences partagé par le fait :
d'obtenir les informations d'état pour la deuxième expérience XR ;
de retirer, à l'expérience XR, l'accès en écriture de contenu dans la totalité de la zone ; et
d'amener la deuxième expérience XR à entrer dans un état actif, où, lorsque la deuxième expérience XR est dans l'état actif, la deuxième augmentation fait l'objet d'un rendu par le dispositif XR (200, 250) conformément aux informations d'état pour la deuxième expérience XR.

14. Un système informatique (100) pour faire passer une application, comprenant une expérience de réalité artificielle (XR), du fait d'être exploitée dans un environnement d'expériences partagé au fait d'être exploitée dans un mode exclusif, le système informatique (100) comprenant :
un ou plusieurs processeurs (110) ; et
une ou plusieurs mémoires (150, 160, 170) stockant des instructions qui, lorsqu'elles sont exécutées par les un ou plusieurs processeurs (110), amènent le système informatique (100) à effectuer un processus comprenant le fait :
d'effectuer le rendu, par un dispositif XR (200, 250), de l'environnement d'expériences partagé comprenant de multiples augmentations (110, 1112, 1114A, 1114B), correspondant à de multiples applications, où les multiples augmentations (110, 1112, 1114A, 1114B) comprennent une augmentation, pour l'expérience XR, ayant une ou plusieurs entités (1140A, 1140B, 1140C) ; et
en réponse au fait de recevoir une indication de passage au mode exclusif, de faire passer l'expérience XR du fait d'être exploitée dans l'environnement d'expériences partagé au fait d'être exploitée dans le mode exclusif par le fait :
d'amener les multiples augmentations (110, 1112, 1114A, 1114B), autres que l'augmentation pour l'expérience XR, à entrer dans un état inactif ;
de fournir des autorisations à l'expérience XR d'accéder à des interfaces de programmation d'application (API) de mode exclusif qui fournissent un accès renforcé à des ressources système et à des informations d'environnement ;
de fournir, à l'expérience XR, un accès en écriture de contenu dans une zone comprenant au moins certains emplacements précédemment occupés par les multiples augmentations (110, 1112, 1114A, 1114B) autres que l'augmentation ; et
d'empêcher les multiples applications, autres que l'expérience XR, d'écrire du contenu dans la zone ;
facultativement, où le fait pour les augmentations d'entrer dans l'état inactif comprend le fait pour les augmentations de passer à une forme réduite et d'être déplacées vers une zone dédiée aux augmentations inactives.

15. Le système informatique (100) de la revendication 14,
où le fait de faire passer l'expérience XR du fait d'être exploitée au sein de l'environnement d'expériences partagé au mode exclusif comprend le fait de modifier une quantité de ressources système allouées à l'expérience XR ; et
où une quantité plus importante de ressources système est allouée à l'expérience XR lorsque l'expérience XR est exploitée en mode exclusif que lorsque l'expérience XR est exploitée au sein de l'environnement d'expériences partagé ;
facultativement, où les ressources système comprennent au moins un élément parmi :
une capacité de traitement allouée, un usage de mémoire alloué, un usage de zone d'affichage alloué, ou toute combinaison de ceux-ci.
